# EUROPEAN PATENT APPLICATION

(11) **EP 4 679 750 A1**
(43) Date of publication of application: **14.01.2026**
(21) Application number: 24766346.1
(22) Date of filing: 01.03.2024
(51) Int. Cl.: H04L 5/00, H04B 7/06

(54) **MULTI-ANTENNA TRANSMISSION METHOD AND APPARATUS**

(30) Priority: 08.03.2023 CN 202310220660
(71) Applicant: Datang Mobile Communications Equipment Co., Ltd., Beijing 100085 (CN)
(72) Inventor: YANG, Xianjun, Beijing 100085 (CN); SU, Xin, Beijing 100085 (CN)
(74) Representative: Ipsilon
(86) International application number: PCT/CN2024/079510
(87) International publication number: WO 2024/183626

(57) **Abstract**

The present disclosure provides a multi-antenna transmission method and apparatus. The method applied to a network device comprises: sending a downlink signal to a terminal device by means of a far-field antenna array and a near-field antenna array, wherein the terminal device is in a far-field range relative to the far-field antenna array, the terminal device is in a near-field range relative to the near-field antenna array, the downlink signal comprises a physical downlink control channel (PDCCH) signal and/or a physical downlink shared channel (PDSCH) signal, the PDCCH signal is sent on the basis of a PDCCH transmit beam, and the PDSCH signal is sent on the basis of a PDSCH transmit beam.

## Description

### CROSS-REFERENCES TO RELATED APPLICATIONS

The present application claims priority to Chinese patent application No. 202310220660.X filed on March 08, 2023, entitled "Multi-Antenna Transmission Method and Apparatus", which is hereby incorporated by reference in its entirety.

### FIELD

The present application relates to the field of communications, and in particular, to methods and apparatuses for multi-antenna transmission.

### BACKGROUND

Near-field communication refers to communication in which a terminal has a high probability of being within a near-field range of a base station in case that a number of antennas of the base station is very large or a carrier frequency is very high (such as in terahertz (THz) communication). Traditional communications generally belong to far-field communication because a number of antennas is generally not large enough. In future communications, ultra-large-scale antennas and THz communications would play a key role in improving a system capacity and a transmission rate.

In the near-field communication, processing on spherical waves may enable beams to be focused to a specific position. That is, beam focusing may be achieved, energy is more concentrated, and more users may be served at a same time. However, at the same time, the beam focusing in a near field requires a base station to be very accurate in beaming, otherwise it may cause communication for a terminal to be interrupted, that is, it is easy to cause beam failure.

Therefore, it is necessary to study a method to reduce a probability of beam failure in case that near-field beam focusing is used.

### BRIEF SUMMARY

Embodiments of the present application provide methods and apparatuses for multi-antenna transmission to solve a problem of high probability of beam failure in case that near-field beam focusing is used in the related art, and reduce a probability of beam failure.

An embodiment of the present application provides a method for multi-antenna transmission, performed by a network device, including:
sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

In an embodiment, the far-field antenna array and the near-field antenna array are obtained by the network device dividing an ultra-large-scale antenna array.

In an embodiment, sending the downlink signal to the terminal device through the far-field antenna array and the near-field antenna array includes:
sending the PDCCH signal through the far-field antenna array; and
sending the PDSCH signal through the near-field antenna array.

In an embodiment, sending the downlink signal to the terminal device through the far-field antenna array and the near-field antenna array includes:
in a first time length unit, sending the PDCCH signal and the PDSCH signal through the near-field antenna array; and
in a second time length unit, sending the PDCCH signal and the PDSCH signal respectively through different far-field antenna arrays.

In an embodiment, the near-field antenna array is an ultra-large-scale antenna array.

In an embodiment, sending the PDCCH signal and the PDSCH signal through the near-field antenna array includes:
sending the PDCCH signal and the PDSCH signal in a time division, frequency division or time-frequency division manner.

In an embodiment, the first time length unit and the second time length unit constitute a first period; and sending the downlink signal to the terminal device through the far-field antenna array and the near-field antenna array includes:
periodically sending the downlink signal based on the first period.

In an embodiment, sending the downlink signal to the terminal device through the far-field antenna array and the near-field antenna array includes:
in a third time length unit, sending the PDCCH signal through the far-field antenna array and sending the PDSCH signal through the near-field antenna array; and
in a fourth time length unit, sending the PDCCH signal and the PDSCH signal respectively through different far-field antenna arrays.

In an embodiment, the third time length unit and the fourth time length unit constitute a second period; and sending the downlink signal to the terminal device through the far-field antenna array and the near-field antenna array includes:
periodically sending, based on the second period, the downlink signal to the terminal device.

In an embodiment, before sending the downlink signal to the terminal device, the method further includes:
sending first indication information to the terminal device, where the first indication information is used to indicate periodic sending of the downlink signal.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, in case that the PDCCH signal is sent to the terminal device through the near-field antenna array, the method further includes:
obtaining location information of the terminal device, and forming the PDCCH sending beam based on the location information and by a beam focusing manner.

In an embodiment, forming the PDCCH sending beam based on the location information and by the beam focusing manner includes:
determining a communication sub-area where the terminal device belongs based on the location information; and
using a beam, formed by beam focusing, corresponding to the communication sub-area where the terminal device belongs as the PDCCH sending beam,
where a corresponding relationship between the communication sub-area and the PDCCH sending beam is predefined.

In an embodiment, before sending the PDCCH signal, the method further includes:
sending second indication information to the terminal device, where the second indication information is used to indicate any one of:
the corresponding relationship between the communication sub-area and the PDCCH sending beam; or
the PDCCH sending beam.

In an embodiment, in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
where the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

In an embodiment, in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the method further includes:
obtaining location information of the terminal device, and forming the PDSCH sending beam based on the location information and by a beam focusing manner.

In an embodiment, forming the PDSCH sending beam based on the location information and by the beam focusing manner includes:
determining a communication sub-area to where the terminal device belongs based on the location information of the terminal device; and
using a beam, formed by beam focusing, corresponding to the communication sub-area where the terminal device belongs as the PDSCH sending beam,
where a corresponding relationship between the communication sub-area and the PDSCH sending beam is predefined.

In an embodiment, before sending the PDSCH signal, the method further includes:
sending third indication information to the terminal device, where the third indication information is used to indicate any one of:
the corresponding relationship between the communication sub-area and the PDSCH sending beam; or
the PDSCH sending beam.

In an embodiment, in case that a sending time gap between the PDSCH signal and a PDCCH signal that schedules the PDSCH signal is greater than a threshold, the method further includes:
indicating the PDSCH sending beam to the terminal device through the PDCCH signal that schedules the PDSCH signal.

In an embodiment, before sending the downlink signal, the method further includes:
sending fourth indication information to the terminal device, where the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, the method further includes:
turning off antenna elements on a periphery of the far-field antenna array and/or the near-field antenna array.

An embodiment of the present application further provides a method for multi-antenna transmission, performed by a terminal device, including:
receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

In an embodiment, before receiving, from the network device, the downlink signal sent through the far-field antenna array and the near-field antenna array, the method further includes:
receiving fourth indication information sent from the network device;
determining a sending manner of the downlink signal based on the fourth indication information;
determining a PDCCH sending beam and/or a PDSCH sending beam based on the sending manner of the downlink signal and beam indication information; and
determining the PDCCH receiving beam based on the PDCCH sending beam, and/or, determining the PDSCH receiving beam based on the PDSCH sending beam,
where the sending manner of the downlink signal includes sending from the far-field antenna array or the near-field antenna array; and the beam indication information is received from the network device or pre-agreed between the terminal device and the network device.

In an embodiment, the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, in case that the fourth indication information is used to indicate the division manner corresponding to the sub-array and the sending content corresponding to the sub-array, determining a sending manner of the downlink signal based on the fourth indication information includes:
based on the division manner corresponding to the sub-array and a distance between the terminal device and the network device, determining that the sub-array is the far-field antenna array or the near-field antenna array; and
based on the sub-array being the far-field antenna array or the near-field antenna array, and the sending content corresponding to the sub-array, determining the sending manner of the downlink signal.

In an embodiment, in case that a sending manner of the PDCCH signal is the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
determining the PDCCH sending beam includes:
   determining the PDCCH sending beam based on the second indication information.

In an embodiment, in case that the second indication information is used to indicate the corresponding relationship between the communication sub-area and the PDCCH sending beam, determining the PDCCH sending beam based on the second indication information includes:
determining the communication sub-area where the terminal device belongs based on location information of the terminal device; and
determining the PDCCH sending beam based on the communication sub-area where the terminal device belongs and the corresponding relationship between the communication sub-area and the PDCCH sending beam.

In an embodiment, in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
determining the PDSCH sending beam includes:
   determining the PDSCH sending beam based on the third indication information.

In an embodiment, in case that the third indication information is used to indicate the corresponding relationship between the communication sub-area and the PDSCH sending beam, determining the PDSCH sending beam based on the third indication information includes:
determining the communication sub-area where the terminal device belongs based on location information of the terminal device; and
determining the PDSCH sending beam based on the communication sub-area where the terminal device belongs and the corresponding relationship between the communication sub-area and the PDSCH sending beam.

In an embodiment, in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

In an embodiment, in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
determining the PDSCH sending beam includes:
determining the PDSCH sending beam based on the first PDCCH sending beam, and the association relationship between the first PDCCH sending beam and the PDSCH sending beam,
where the first PDCCH sending beam is used to send the PDCCH signal that schedules the PDSCH signal.

In an embodiment, before receiving, from the network device, the downlink signal sent through the far-field antenna array and the near-field antenna array, the method further includes:
receiving first indication information sent from the network device, where the first indication information is used to indicate periodic sending of the downlink signal; and
receiving, from the network device, the downlink signal sent through the far-field antenna array and the near-field antenna array includes:
   periodically receiving, based on the first indication information, the downlink signal sent from the network device through the far-field antenna array and the near-field antenna array.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, the terminal device is configured with at least one panel, and different panels are used to receive different beams.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing any of the methods for multi-antenna transmission performed by the network device above.

An embodiment of the present application further provides a terminal device, including a memory, a transceiver and a processor,
where the memory is used for storing a computer program, the transceiver is used for receiving and sending data under control of the processor, and the processor is used for reading the computer program in the memory and performing any of the methods for multi-antenna transmission performed by the terminal device above.

An embodiment of the present application further provides an apparatus for multi-antenna transmission, for use in a network device, including:
a sending unit, used for sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

In an embodiment, the far-field antenna array and the near-field antenna array are obtained by the network device dividing an ultra-large-scale antenna array.

In an embodiment, the sending unit, used for sending the downlink signal to the terminal device through the far-field antenna array and the near-field antenna array, includes:
the sending unit is used for sending the PDCCH signal through the far-field antenna array; and
the sending unit is used for sending the PDSCH signal through the near-field antenna array.

In an embodiment, the sending unit, used for sending the downlink signal to the terminal device through the far-field antenna array and the near-field antenna array, includes:
the sending unit is used for, in a first time length unit, sending the PDCCH signal and the PDSCH signal through the near-field antenna array; and
the sending unit is used for, in a second time length unit, sending the PDCCH signal and the PDSCH signal respectively through different far-field antenna arrays.

In an embodiment, the near-field antenna array is an ultra-large-scale antenna array.

In an embodiment, the sending unit is used for sending the PDCCH signal and the PDSCH signal through the near-field antenna array includes:
the sending unit is used for sending the PDCCH signal and the PDSCH signal in a time division, frequency division or time-frequency division manner.

In an embodiment, the first time length unit and the second time length unit constitute a first period; and
the sending unit, used for sending the downlink signal to the terminal device through the far-field antenna array and the near-field antenna array, includes:
the sending unit is used for periodically sending the downlink signal based on the first period.

In an embodiment, the sending unit, used for sending the downlink signal to the terminal device through the far-field antenna array and the near-field antenna array, includes:
the sending unit is used for, in a third time length unit, sending the PDCCH signal through the far-field antenna array and sending the PDSCH signal through the near-field antenna array; and
the sending unit is used for, in a fourth time length unit, sending the PDCCH signal and the PDSCH signal respectively through different far-field antenna arrays.

In an embodiment, the third time length unit and the fourth time length unit constitute a second period; and
the sending unit, used for sending the downlink signal to the terminal device through the far-field antenna array and the near-field antenna array, includes:
the sending unit is used for periodically sending, based on the second period, the downlink signal to the terminal device.

In an embodiment, the sending unit is further used for, before sending the downlink signal to the terminal device, sending first indication information to the terminal device, where the first indication information is used to indicate periodic sending of the downlink signal.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, in case that the PDCCH signal is sent to the terminal device through the near-field antenna array, the apparatus further includes a first sending beam determining unit, where
the first sending beam determining unit is used for obtaining location information of the terminal device, and forming the PDCCH sending beam based on the location information and by a beam focusing manner.

In an embodiment, the first sending beam determining unit is used for forming the PDCCH sending beam based on the location information and by the beam focusing manner includes:
the first sending beam determining unit is used for determining a communication sub-area where the terminal device belongs based on the location information; and
the first sending beam determining unit is used for using a beam, formed by beam focusing, corresponding to the communication sub-area where the terminal device belongs as the PDCCH sending beam,
where a corresponding relationship between the communication sub-area and the PDCCH sending beam is predefined.

In an embodiment, the sending unit is further used for, before sending the PDCCH signal, sending second indication information to the terminal device, where the second indication information is used to indicate any one of:
the corresponding relationship between the communication sub-area and the PDCCH sending beam; or
the PDCCH sending beam.

In an embodiment, in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
where the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

In an embodiment, in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the apparatus further includes a second sending beam determining unit, where
the second sending beam determining unit is used for obtaining location information of the terminal device, and forming the PDSCH sending beam based on the location information and by a beam focusing manner.

In an embodiment, the second sending beam determining unit is used for forming the PDSCH sending beam based on the location information and by the beam focusing manner includes:
the second sending beam determining unit is used for determining a communication sub-area to where the terminal device belongs based on the location information of the terminal device; and
the second sending beam determining unit is used for using a beam, formed by beam focusing, corresponding to the communication sub-area where the terminal device belongs as the PDSCH sending beam,
where a corresponding relationship between the communication sub-area and the PDSCH sending beam is predefined.

In an embodiment, the sending unit is used for, before sending the PDSCH signal, sending third indication information to the terminal device, where
the third indication information is used to indicate any one of:
the corresponding relationship between the communication sub-area and the PDSCH sending beam; or
the PDSCH sending beam.

In an embodiment, in case that a sending time gap between the PDSCH signal and a PDCCH signal that schedules the PDSCH signal is greater than a threshold, the apparatus further includes a first indicating unit, where
the first indicating unit is used for indicating the PDSCH sending beam to the terminal device through the PDCCH signal that schedules the PDSCH signal.

In an embodiment, the sending unit is further used for, before sending the downlink signal, sending fourth indication information to the terminal device, where
the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, the apparatus further includes a turning-off unit, where
the turning-off unit is used for turning off antenna elements on a periphery of the far-field antenna array and/or the near-field antenna array.

An embodiment of the present application further provides an apparatus for multi-antenna transmission, for use in a terminal device, including:
a receiving unit, used for receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

In an embodiment, the apparatus further includes: a sending manner determining unit, a third sending beam determining unit, and a receiving beam determining unit, where
the receiving unit is further used for receiving fourth indication information sent from the network device;
the sending manner determining unit is used for determining a sending manner of the downlink signal based on the fourth indication information;
the third sending beam determining unit is used for determining a PDCCH sending beam and/or a PDSCH sending beam based on the sending manner of the downlink signal and beam indication information; and
the receiving beam determining unit is used for determining the PDCCH receiving beam based on the PDCCH sending beam, and/or, determining the PDSCH receiving beam based on the PDSCH sending beam,
where the sending manner of the downlink signal includes being sent from the far-field antenna array or the near-field antenna array; and the beam indication information is received from the network device or pre-agreed between the terminal device and the network device.

In an embodiment, the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, in case that the fourth indication information is used to indicate the division manner corresponding to the sub-array and the sending content corresponding to the sub-array, the sending manner determining unit is used for determining a sending manner of the downlink signal based on the fourth indication information includes:
the sending manner determining unit is used for, based on the division manner corresponding to the sub-array and a distance between the terminal device and the network device, determining that the sub-array is the far-field antenna array or the near-field antenna array; and
the sending manner determining unit is used for, based on the sub-array being the far-field antenna array or the near-field antenna array, and the sending content corresponding to the sub-array, determining the sending manner of the downlink signal.

In an embodiment, in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
the third sending beam determining unit is used for determining the PDCCH sending beam includes:
   the third sending beam determining unit is used for determining the PDCCH sending beam based on the second indication information.

In an embodiment, in case that the second indication information is used to indicate the corresponding relationship between the communication sub-area and the PDCCH sending beam, the third sending beam determining unit is used for determining the PDCCH sending beam based on the second indication information includes:
the third sending beam determining unit is used for determining the communication sub-area where the terminal device belongs based on location information of the terminal device; and
the third sending beam determining unit is used for determining the PDCCH sending beam based on the communication sub-area where the terminal device belongs and the corresponding relationship between the communication sub-area and the PDCCH sending beam.

In an embodiment, in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
the third sending beam determining unit is used for determining the PDSCH sending beam includes:
   the third sending beam determining unit is used for determining the PDSCH sending beam based on the third indication information.

In an embodiment, in case that the third indication information is used to indicate the corresponding relationship between the communication sub-area and the PDSCH sending beam, the third sending beam determining unit is used for determining the PDSCH sending beam based on the third indication information includes:
the third sending beam determining unit is used for determining the communication sub-area where the terminal device belongs based on location information of the terminal device; and
the third sending beam determining unit is used for determining the PDSCH sending beam based on the communication sub-area where the terminal device belongs and the corresponding relationship between the communication sub-area and the PDSCH sending beam.

In an embodiment, in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

In an embodiment, in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
the third sending beam determining unit is used for determining the PDSCH sending beam includes:
the third sending beam determining unit is used for determining the PDSCH sending beam based on the first PDCCH sending beam, and the association relationship between the first PDCCH sending beam and the PDSCH sending beam,
where the first PDCCH sending beam is used to send the PDCCH signal that schedules the PDSCH signal.

In an embodiment, before receiving, from the network device, the downlink signal sent through the far-field antenna array and the near-field antenna array:
the receiving unit is further used for receiving first indication information sent from the network device, where the first indication information is used to indicate periodic sending of the downlink signal; and
the receiving unit is used for receiving, from the network device, the downlink signal sent through the far-field antenna array and the near-field antenna array includes:
   the receiving unit is used for, periodically receiving, based on the first indication information, the downlink signal sent from the network device through the far-field antenna array and the near-field antenna array.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, the terminal device is configured with at least one panel, and different panels are used to receive different beams.

An embodiment of the present application further provides a processor-readable storage medium storing a computer program, where the computer program is used for causing a processor to perform any of the methods performed by the network device described above.

An embodiment of the present application further provides a processor-readable storage medium storing a computer program, where the computer program is used for causing a processor to perform any of the methods performed by the terminal device described above.

In the methods and apparatuses for multi-antenna transmission provided by the embodiments of the present application, the network device sends the downlink signal to the terminal device through the far-field antenna array and the near-field antenna array, and performs signal transmission in a near field and far field joint way: under a near-field condition (the network device sends the downlink signal to the terminal device through the near-field antenna array, and the terminal device is in a near field), the beam may be focused to a specific position, achieving beam focusing, energy of the signal is more concentrated, and more users may be served at a same time; under a far-field condition (the network device sends the downlink signal to the terminal device through the far-field antenna array, and the terminal device is in a far field), an advantage of a large coverage area of a far-field beam is used to reduce a probability of beam failure caused by a small coverage area of near-field beam focusing. In the method for multi-antenna transmission provided by the embodiments of the present application, not only more power gain may be obtained and a system capacity may be improved by obtaining a beam focusing gain through the near-field antenna array, but also communication reliability may be improved and the probability of beam failure may be reduced by using the far-field antenna.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for multi-antenna transmission according to an embodiment of the present application;
FIG. 2 is a first schematic diagram of communication according to an embodiment of the present application;
FIG. 3 is a second schematic diagram of communication according to an embodiment of the present application;
FIG. 4 is a third schematic diagram of communication according to an embodiment of the present application;
FIG. 5 is a fourth schematic diagram of communication according to an embodiment of the present application;
FIG. 6 is a fifth schematic diagram of communication according to an embodiment of the present application;
FIG. 7 is a sixth schematic diagram of communication according to an embodiment of the present application;
FIG. 8 is a schematic diagram of an ultra-large-scale antenna array according to an embodiment of the present application;
FIG. 9 is a second schematic flowchart of a method for multi-antenna transmission according to an embodiment of the present application;
FIG. 10 is a first schematic structural diagram of an apparatus for multi-antenna transmission according to an embodiment of the present application;
FIG. 11 is a second schematic structural diagram of an apparatus for multi-antenna transmission according to an embodiment of the present application;
FIG. 12 is a schematic structural diagram of a network device according to an embodiment of the present application; and
FIG. 13 is a schematic structural diagram of a terminal device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

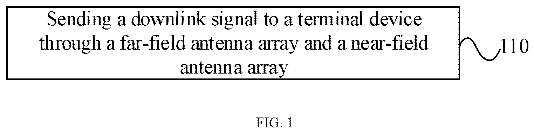

FIG. 1 is a first schematic flowchart of a method for multi-antenna transmission according to an embodiment of the present application. As shown in FIG. 1, an embodiment of the present application provides a method for multi-antenna transmission, performed by a network device, including:
step 110: sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

In an embodiment, the terminal device is within the far-field range relative to the far-field antenna array, that is, the far-field antenna array may make the terminal device in a far field; the terminal device is within the near-field range relative to the near-field antenna array, that is, the near-field antenna array may make the terminal device in a near field.

A total number of far-field antenna arrays may be one or more, and a total number of near-field antenna arrays may be one or more. The embodiments of the present application do not limit the total number of the far-field antenna arrays and the total number of the near-field antenna arrays.

A number of far-field antenna arrays in a working state may be one or more, and a number of near-field antenna arrays in a working state may be one or more. The embodiments of the present application do not limit a number of far-field antenna arrays used by the network device and a number of near-field antenna arrays used by the network device.

Sending the downlink signal to the terminal device through the far-field antenna array and the near-field antenna array refers to sending the downlink signal to the terminal device in a near-field antenna array and far-field antenna array joint way.

In a working way of combining the far-field antenna array and the near-field antenna array, whether the far-field antenna array and the near-field antenna array work simultaneously is not limited:
the far-field antenna array and the near-field antenna array may work simultaneously: for example, there are M far-field antenna arrays sending downlink signals, and at the same time, there are N near-field antenna arrays sending downlink signals;
the far-field antenna array and the near-field antenna array work in a time-division manner: for example, in a first time unit, there are M far-field antenna arrays sending downlink signals; and in a second time unit, there are N near-field antenna arrays sending downlink signals; or
the far-field antenna array and the near-field antenna array may also work in a way of a combination of simultaneous working and a time-division manner: for example, in a first time unit, there are M far-field antenna arrays and N near-field antenna arrays working simultaneously to send downlink signals; in a second time unit, there are M far-field antenna arrays sending downlink signals; and in a third time unit, there are N near-field antenna arrays sending downlink signals.

The above examples are provided to facilitate understanding of the present application and shall not constitute any limitation to the present application.

For the downlink signal, it includes the PDCCH signal and/or the PDSCH signal.

The far-field antenna array may be used to send only one of the PDCCH signal or the PDSCH signal, or to send both the PDCCH signal and the PDSCH signal.

The near-field antenna array may be used to send only one of the PDCCH signal or the PDSCH signal, or to send both the PDCCH signal and the PDSCH signal.

The PDCCH sending beam is a beam used by the network device to send the PDCCH signal, and the PDSCH sending beam is a beam used by the network device to send the PDSCH signal.

In the method for multi-antenna transmission provided by the embodiments of the present application, the network device sends the downlink signal to the terminal device through the far-field antenna array and the near-field antenna array, and performs signal transmission in a near field and far field joint way: under a near-field condition (the network device sends the downlink signal to the terminal device through the near-field antenna array, and the terminal device is in a near field), the beam may be focused to a specific position, achieving beam focusing, energy of the signal is more concentrated, and more users may be served at a same time; under a far-field condition (the network device sends the downlink signal to the terminal device through the far-field antenna array, and the terminal device is in a far field), an advantage of a large coverage area of a far-field beam is used to reduce a probability of beam failure caused by a small coverage area of near-field beam focusing. In the method for multi-antenna transmission provided by the embodiments of the present application, not only more power gain may be obtained and a system capacity may be improved by obtaining a beam focusing gain through the near-field antenna array, but also communication reliability may be improved and the probability of beam failure may be reduced by using the far-field antenna.

In an embodiment, the far-field antenna array and the near-field antenna array are obtained by the network device dividing an ultra-large-scale antenna array.

In an embodiment, the network device may divide the ultra-large-scale antenna array into multiple sub-arrays; a sub-array that makes the terminal in a far field is a far-field antenna array, and a sub-array that makes the terminal in a near field is a near-field antenna array.

In an embodiment, sizes of the multiple sub-arrays may be completely same, completely different, or not completely same.

In case that the sizes of the multiple sub-arrays are completely the same, the multiple sub-arrays may all be far-field antenna arrays or near-field antenna arrays.

In an embodiment, the network device determines a division manner for the sub-arrays based on a requirement of the terminal device for reliability and data rate, channel environment, deployment difficulty, etc. Different sub-arrays may send a PDCCH and/or a PDSCH, and different working ways may also be periodically alternated by a time division manner.

The network device may dynamically divide the ultra-large-scale antenna array, that is, a size and a position of a sub-array obtained by the network device in each time unit length may be different.

The present application does not limit a specific division of the sub-arrays, as long as a division manner may achieve a goal of making the terminal device in the near field or making the terminal device in the far field.

In an embodiment, before sending the downlink signal, the method further includes:
sending fourth indication information to the terminal device, where the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, the size information of the sub-array and/or the location information of the sub-array may be jointly used with a distance between the terminal device and the network device, to determine, by the terminal, a type of the sub-array, where the type of the sub-array includes the far-field antenna array and the near-field antenna array.

In an embodiment, sending the downlink signal to the terminal device through the far-field antenna array and the near-field antenna array includes:
sending the PDCCH signal through the far-field antenna array; and
sending the PDSCH signal through the near-field antenna array.

In an embodiment, the network device selects a far-field antenna array that makes the terminal device in a far field to send the PDCCH signal, and the network device selects a near-field antenna array that makes the terminal device in a near field to send the PDSCH signal.

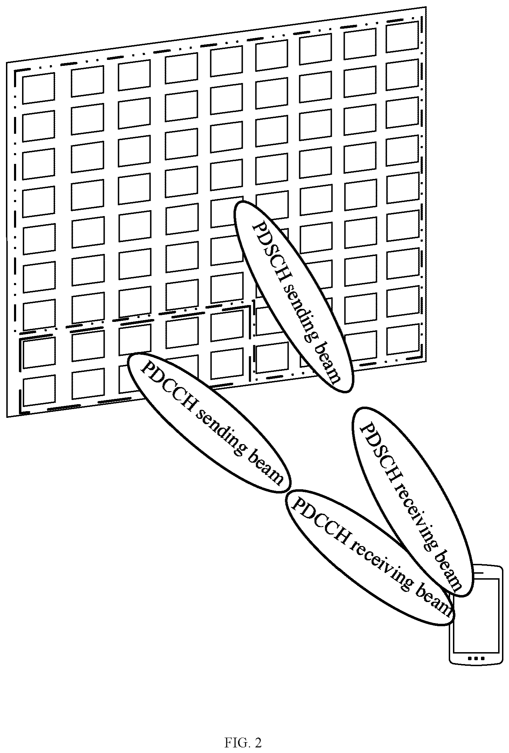

For example, FIG. 2 is a first schematic diagram of communication according to an embodiment of the present application. As shown in FIG. 2, a network device divides an ultra-large-scale antenna array into two sub-arrays, a larger sub-array (an array framed by dash-dotted lines in the figure) is a near-field antenna array, and a smaller sub-array (an array framed by dashed lines in the figure) is a far-field antenna array. The near-field antenna array is used to send a PDSCH signal, and the far-field antenna array is used to send a PDCCH signal.

In the method for multi-antenna transmission provided by the embodiments of the present application, the PDCCH signal is sent through the far-field antenna array, so that the PDCCH sending beam is directed to the terminal device, and reliability of the PDCCH sending beam is improved; and the PDSCH signal is sent through the near-field antenna array, so that the PDSCH sending beam is focused on the terminal device, and the PDSCH sending beam can obtain more power gain.

In an embodiment, sending the downlink signal to the terminal device through the far-field antenna array and the near-field antenna array includes:
in a first time length unit, sending the PDCCH signal and the PDSCH signal through the near-field antenna array;
   and
in a second time length unit, sending the PDCCH signal and the PDSCH signal respectively through different far-field antenna arrays.

In an embodiment, in the first time length unit, the network device uses the near-field antenna array to send the PDCCH signal and the PDSCH signal.

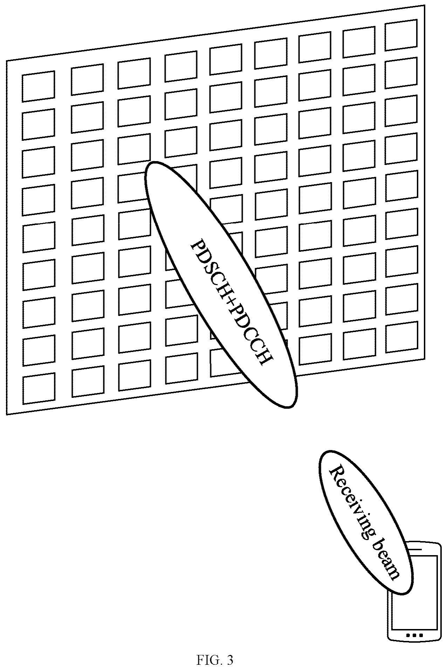

In an embodiment, in the first time length unit, the near-field antenna array used by the network device is an ultra-large-scale antenna array. That is, in the first time length unit, the network device may not divide the ultra-large-scale antenna array, and use the entire ultra-large-scale antenna array as the near-field antenna array. FIG. 3 is a second schematic diagram of communication according to an embodiment of the present application. As shown in FIG. 3, the network device uses the entire ultra-large-scale antenna array as the near-field antenna array to send the PDCCH signal and the PDSCH signal to the terminal device. In this case, the PDCCH sending beam and the PDSCH sending beam may be a same beam.

FIG. 3 is a schematic diagram to facilitate understanding the present application, and does not mean that the PDCCH signal and the PDSCH signal must be sent by a same beam at a same time.

In an embodiment, sending the PDCCH signal and the PDSCH signal through the near-field antenna array includes:
sending the PDCCH signal and the PDSCH signal in a time division, frequency division or time-frequency division manner.

In an embodiment, in case that the network device sends the PDCCH signal and the PDSCH signal through a same near-field antenna array, the PDCCH signal and the PDSCH signal may be sent in a time division, frequency division or time-frequency division manner.

For example, in case of sending the PDCCH signal and the PDSCH signal in the time division manner: the network device may divide a time domain resource, and send the PDCCH signal and the PDSCH signal respectively in different time periods.

In an embodiment, the PDCCH signal and the PDSCH signal are sent in different durations through the entire ultra-large-scale antenna array, such as sending the PDCCH signal at a first timing and sending the PDSCH signal at a second timing.

For example, in case of sending the PDCCH signal and the PDSCH signal in the frequency division manner: the network device may divide a frequency domain resource, may divide a total bandwidth used for a transmission channel into several sub-bands (or sub-channels), and send the PDCCH signal and the PDSCH signal respectively through the several sub-bands.

In an embodiment, the PDCCH signal and the PDSCH signal are respectively sent on several sub-bands through the entire ultra-large-scale antenna array, such as sending the PDCCH signal on a first sub-band and sending the PDSCH signal on a second sub-band.

For example, in case of sending the PDCCH signal and the PDSCH signal in the time-frequency division manner: the network device divides both a time domain resource and a frequency domain resource, and the PDCCH signal and the PDSCH signal may be sent respectively in different time periods and on different sub-bands.

In an embodiment, the PDCCH signal and the PDSCH signal are respectively sent in different time periods and on different sub-bands through the entire ultra-large-scale antenna array, such as sending the PDCCH signal on a first sub-band at a first timing and sending the PDSCH signal on a second sub-band at a second timing.

In the second time length unit, the network device may divide the ultra-large-scale antenna array into multiple far-field antenna arrays. In an embodiment, sizes of the multiple far-field antenna arrays (the multiple far-field antenna arrays obtained by the network device dividing the ultra-large-scale antenna array in the second time length unit) may be same or different.

In the second time length unit, the network device selects a part of far-field antenna arrays from multiple far-field antenna arrays to send the PDCCH signal, and the network device selects remaining far-field antenna arrays to send the PDSCH signal. The selection of the part of the far-field antenna arrays and the selection of the remaining far-field antenna arrays are expressions to facilitate understanding, and the embodiments of the present application do not limit a selection order of the far-field antenna arrays.

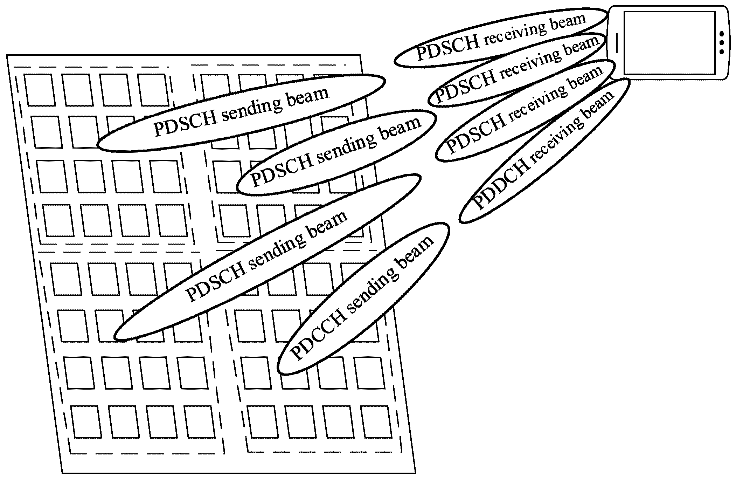

For example, FIG. 4 is a third schematic diagram of communication according to an embodiment of the present application. As shown in FIG. 4, a network device obtains four far-field antenna arrays of a same size (indicated in each dashed box) by dividing an ultra-large-scale antenna array. The network device selects a far-field antenna array in a lower left corner to send a PDCCH signal, and selects other far-field antenna arrays to send a PDSCH signal.

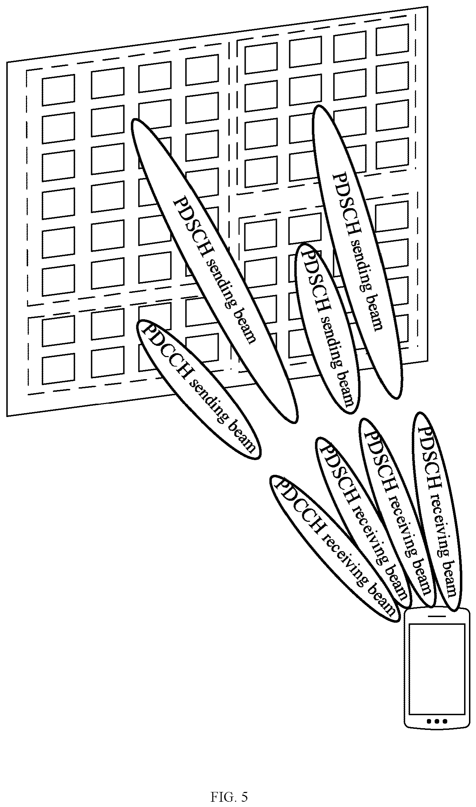

For example, FIG. 5 is a fourth schematic diagram of communication according to an embodiment of the present application. As shown in FIG. 5, a network device obtains four far-field antenna arrays of different sizes (indicated in each dashed box) by dividing an ultra-large-scale antenna array. The network device selects a far-field antenna array in a lower left corner to send a PDCCH signal, and selects other far-field antenna arrays to send a PDSCH signal.

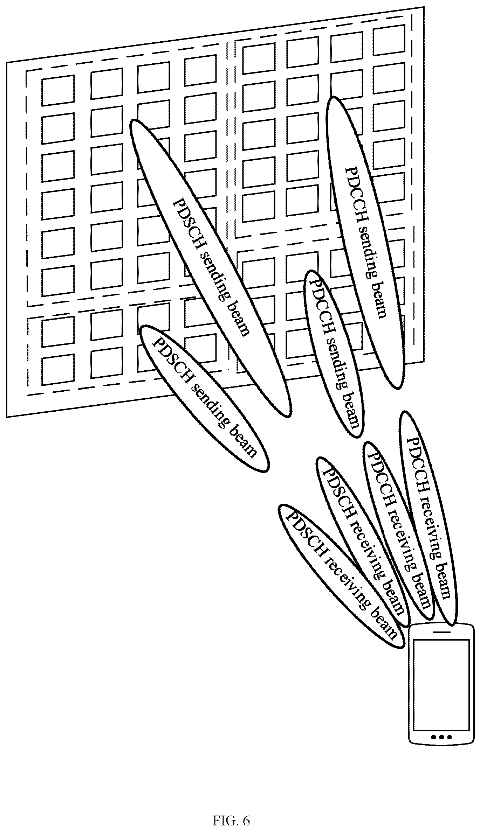

For example, FIG. 6 is a fifth schematic diagram of communication according to an embodiment of the present application. As shown in FIG. 6, a network device obtains four far-field antenna arrays of different sizes (as shown in each dashed box) by dividing an ultra-large-scale antenna array. The network device selects far-field antenna arrays on the left to send a PDSCH signal and selects other far-field antenna arrays to send a PDCCH signal.

The above are examples to facilitate understanding the present application. The embodiments of the present application do not limit a number of far-field antenna arrays used to send the PDCCH signal and a number of far-field antenna arrays used to send the PDSCH signal. As shown in FIG. 4 and FIG. 5, there may be two far-field antenna arrays used to send the PDCCH signal and two far-field antenna arrays used to send the PDSCH signal respectively. In FIG. 6, one far-field antenna array may also be selected to send the PDCCH signal, and three far-field antenna arrays may be selected to send the PDSCH signal. In addition, the embodiments of the present application do not limit a position of a far-field antenna array used to send the PDCCH signal and a position of a far-field antenna array used to send the PDSCH signal. A far-field antenna array at any position may be selected to send a downlink signal.

The "first" and "second" in the first time length unit and the second time length unit are used to distinguish different times and do not have a sequential meaning, that is, an operation of the network device in the first time length unit and an operation of the network device in the second time length unit may be interchanged.

For example:
in the second time length unit, the network device sends the PDCCH signal and the PDSCH signal through the near-field antenna array; and
in the first time length unit, the network device sends the PDCCH signal and the PDSCH signal respectively through different far-field antenna arrays;
they should also be within a protection scope of the present application.

In an embodiment, the time length unit may be a slot, a symbol, or a subframe, etc.

In the method for multi-antenna transmission provided by the embodiments of the present application, in the first time length unit, the PDCCH signal and the PDSCH signal are sent through the near-field antenna array to improve a power gain of the PDCCH and PDSCH in the first time length unit and obtain a larger system capacity; in the second time length unit, the PDCCH signal and the PDSCH signal are sent respectively through different far-field antenna arrays to improve transmission reliability of the PDCCH signal and the PDSCH signal.

In an embodiment, the first time length unit and the second time length unit constitute a first period; and
sending the downlink signal to the terminal device through the far-field antenna array and the near-field antenna array includes:
periodically sending the downlink signal based on the first period.

In an embodiment, the network device takes the first period as a periodic unit, periodically performs corresponding operations in the first time length unit and the second time length unit, and sends a PDCCH signal and/or a PDSCH signal.

In an embodiment, sending the downlink signal to the terminal device through the far-field antenna array and the near-field antenna array includes:
in a third time length unit, sending the PDCCH signal through the far-field antenna array and sending the PDSCH signal through the near-field antenna array; and
in a fourth time length unit, sending the PDCCH signal and the PDSCH signal respectively through different far-field antenna arrays.

In an embodiment, in the third time length unit, the network device selects a far-field antenna array that makes the terminal device in a far field to send the PDCCH signal, and a beam is directed to the terminal to improve reliability of the PDCCH; the network device selects a near-field antenna array that makes the terminal device in a near field to send the PDSCH signal. As shown in FIG. 2, in the third time length unit, a larger sub-array (the array framed by dash-dotted lines in the figure) is a near-field antenna array, and the near-field antenna array is used to send the PDSCH signal, and a smaller sub-array (the array framed by dashed lines in the figure) is a far-field antenna array, and the far-field antenna array is used to send the PDCCH signal.

In the fourth time length unit, the network device may divide the ultra-large-scale antenna array into multiple far-field antenna arrays. In an embodiment, the multiple far-field antenna arrays (in the fourth time length unit, the multiple far-field antenna arrays obtained by the network device dividing the ultra-large-scale antenna array) may be same or different in size.

In the fourth time length unit, the network device selects a part of the far-field antenna arrays from the multiple far-field antenna arrays to send the PDCCH signal, and the network device selects remaining far-field antenna arrays to send the PDSCH signal.

In the fourth time length unit, the PDCCH signal and the PDSCH signal are respectively sent through different far-field antenna arrays. The introduction of the network device sending the PDCCH signal and the PDSCH signal respectively through different far-field antenna arrays in the second time length unit and the examples of FIG. 4 to FIG. 6 may be referred to, which are not repeated here.

The embodiments of the present application do not limit a number of far-field antenna arrays used to send the PDCCH signal and a number of far-field antenna arrays used to send the PDSCH signal. As shown in FIG. 4 and FIG. 5, there may be two far-field antenna arrays used to send the PDCCH signal and two far-field antenna arrays used to send the PDSCH signal, respectively. In FIG. 6, one far-field antenna array may be selected to send the PDSCH signal, and three far-field antenna arrays may be selected to send the PDCCH signal. Moreover, the embodiments of the present application do not limit a position of the far-field antenna array used to send the PDCCH signal and a position of the far-field antenna array used to send the PDSCH signal. A far-field antenna array at any position may be selected to send the downlink signal.

The "third" and "fourth" in the third time length unit and the fourth time length unit are used to distinguish different times and do not have a sequential meaning, that is, an operation of the network device in the third time length unit and an operation of the network device in the fourth time length unit may be interchanged.

For example:
in the third time length unit, the network device sends the PDCCH signal and the PDSCH signal respectively through different far-field antenna arrays; and
in the fourth time length unit, the network device sends the PDCCH signal through the far-field antenna array and sends the PDSCH signal through the near-field antenna array;
they should also be within the protection scope of the present application.

In an embodiment, the time length unit may be a slot, a symbol, or a subframe, etc.

In the method for multi-antenna transmission provided by the embodiments of the present application, in the third time length unit, the network device sends the PDCCH signal through the far-field antenna array, so that a beam is directed to the terminal, and reliability of the PDCCH is improved, and the network device sends the PDSCH signal through the near-field antenna array, so that a beam is focused on the terminal, and the PDSCH can obtain more power gain; in the fourth time length unit, the network device sends the PDCCH signal and the PDSCH signal respectively through different far-field antenna arrays to transmission reliability of the PDCCH signal and the PDSCH signal.

In an embodiment, the third time length unit and the fourth time length unit constitute a second period; and
sending the downlink signal to the terminal device through the far-field antenna array and the near-field antenna array includes:
periodically sending, based on the second period, the downlink signal to the terminal device.

In an embodiment, the network device takes the second period as a periodic unit, periodically performs corresponding operations in the third time length unit and the fourth time length unit, and sends a PDCCH signal and/or a PDSCH signal.

In an embodiment, before sending the downlink signal to the terminal device, the method further includes:
sending first indication information to the terminal device, where the first indication information is used to indicate periodic sending of the downlink signal.

In an embodiment, the network device sends the first indication information to the terminal device, and the network device indicates, through the first indication information, the terminal device to periodically receive the downlink signal.

For example, in case that the network device periodically sends the downlink signal based on the first period, the network device sends the first indication information to the terminal device.

For example, in case that the network device periodically sends the downlink signal based on the second period, the network device sends the first indication information to the terminal device.

In an embodiment, the first indication information includes at least one of:
a start time of the periodic sending;
a duration of the periodic sending;
an end time of the periodic sending; or
mode information used to indicate a sending mode.

In an embodiment, the start time of the periodic sending refers to a start time of a periodic sending of a downlink signal.

The duration of the periodic sending is used to indicate a lasting time length of the periodic sending, which may be calculated in a unit of period, frame or slot. In a possible implementation, the duration of the periodic sending directly indicates a time length, for example, 20 subframes; in a possible implementation, the duration of the periodic sending may include the start time of the periodic sending and the end time of the periodic sending.

The end time of the periodic sending refers to an end time of a periodic sending of a downlink signal. For example, the first indication information indicates that the start time of the periodic sending is a first subframe after a subframe including the first indication information, and the end time of the periodic sending is a tenth subframe after the subframe including the first indication information. Then, the network device periodically sends the downlink signal from the first subframe to the tenth subframe after the subframe including the first indication information, and accordingly, the terminal device receives the downlink signal from the first subframe to the tenth subframe after receiving the subframe including the first indication information. The above are examples to facilitate understanding the present application and should not constitute any limitation to the present application.

The sending mode refers to a periodic sending mode for sending a downlink signal, and there may be multiple sending modes. In different sending modes, one or more of a period size, each time length unit included in each period, or operation information corresponding to the network device in each time length unit may be different.

The mode information is used to indicate the sending mode, so that the terminal device may adopt a corresponding receiving way based on the mode information to receive the downlink signal.

In an embodiment, the mode information includes at least one of:
a period size;
each time length unit included in a period; or
operation information corresponding to the network device in each time length unit.

In an embodiment, the period size may refer to a length of a period, which may be in a unit of frames, slots, etc.; for example, it may be the first period or the second period.

For each time length unit included in the period, taking the first period as an example, it may include the first time length unit and the second time length unit; taking the second period as an example, it may include the third time length unit and the fourth time length unit.

The operation information corresponding to the network device in each time length unit is used to indicate what operation the network device performs in each time length unit:
taking the first period as an example, the operation information is used to indicate that in the first time length unit, the network device sends the PDCCH signal and the PDSCH signal through the near-field antenna array; and in the second time length unit, the network device sends the PDCCH signal and the PDSCH signal respectively through different far-field antenna arrays.

Accordingly, the terminal device periodically receives, based on received first indication information, a downlink signal in a unit of the first period, receives the PDCCH signal and the PDSCH signal sent from the near-field antenna array in the first time length unit of each period; and receives the PDCCH signal and the PDSCH signal respectively sent from different far-field antenna arrays in the second time length unit of each period.

For example, taking the second period as an example, the operation information is used to indicate that in the third time length unit, the network device sends the PDCCH signal through the far-field antenna array and sends the PDSCH signal through the near-field antenna array; and in the fourth time length unit, the network device sends the PDCCH signal and the PDSCH signal respectively through different far-field antenna arrays.

Accordingly, the terminal device periodically receives, based on received first indication information, a downlink signal in a unit of the second period, receives the PDCCH signal and the PDSCH signal sent from the far-field antenna array in the third time length unit of each period; and receives the PDCCH signal and the PDSCH signal respectively sent from different far-field antenna arrays in the fourth time length unit of each period.

In an embodiment, in case that the network device sends the PDCCH signal through the far-field antenna array, the PDCCH sending beam may be associated with a control resource set (CORESET); and
in case that the far-field antenna array sends the PDCCH signal, the terminal device performs blind detection in configured multiple CORESETs when receiving the PDCCH sending beam; and for each candidate CORESET, the terminal device uses a PDCCH receiving beam corresponding to a PDCCH sending beam for reception, where the PDCCH sending beam corresponds to the CORESET.

In an embodiment, in case that the network device sends the PDSCH signal through the far-field antenna array, if the PDSCH signal is sent simultaneously with a PDCCH signal that schedules the PDSCH, or a scheduling time gap is less than a threshold, a PDSCH sending beam uses a same beam as a PDCCH sending beam; and
if a sending time gap between the PDSCH signal and a PDCCH signal that schedules the PDSCH signal is greater than a threshold, a beam direction of the PDSCH sending beam is specified by the PDCCH signal that schedules the PDSCH signal.

In an embodiment, in case that the PDCCH signal is sent to the terminal device through the near-field antenna array, the method further includes:
obtaining location information of the terminal device, and forming the PDCCH sending beam based on the location information and by a beam focusing manner.

In an embodiment, in case that the PDCCH signal is sent to the terminal device through the near-field antenna array, if the entire ultra-large-scale antenna array is used to send the PDCCH signal, the PDCCH sending beam is determined based on the location information. In an embodiment, the PDCCH sending beam is associated with the location information, and the PDCCH sending beam is formed by the beam focusing manner.

In an embodiment, forming the PDCCH sending beam based on the location information and by the beam focusing manner includes:
determining a communication sub-area where the terminal device belongs based on the location information; and
using a beam, formed by beam focusing, corresponding to the communication sub-area where the terminal device belongs as the PDCCH sending beam,
where a corresponding relationship between the communication sub-area and the PDCCH sending beam is predefined.

In an embodiment, the communication sub-area is obtained by the network device dividing a coverage range (also referred to as a coverage area) of the network device, and an area of the communication sub-area is less than or equal to a range of the beam focusing; and
the communication sub-area is configured with a corresponding PDCCH sending beam, that is, the corresponding relationship between the communication sub-area and the PDCCH beam is predefined.

In an embodiment, the corresponding relationship between the communication sub-area and the PDCCH beam is predefined by the network device. In an embodiment, the corresponding relationship between the communication sub-area and the PDCCH beam refers to a corresponding relationship between the communication sub-area and a beam corresponding to the communication sub-area and formed by beam focusing. That is, the beam corresponding to the communication sub-area and formed by beam focusing is predefined by the network device.

The network device obtains the location information of the terminal device, and the network device determines the communication sub-area where the terminal device belongs based on the location information, and uses the beam corresponding to the communication sub-area and formed by beam focusing as the PDCCH sending beam.

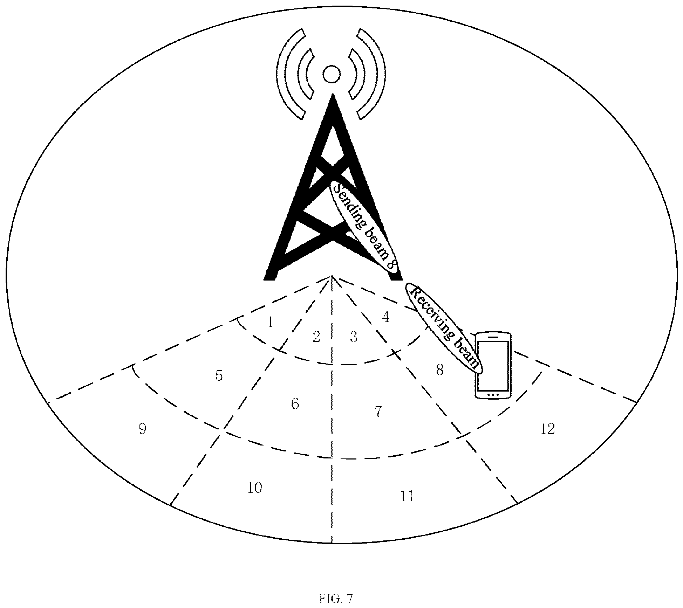

For example, FIG. 7 is a sixth schematic diagram of communication according to an embodiment of the present application. As shown in FIG. 7, taking a division of a part of the coverage area as an example, the network device divides a part of the coverage area into a total of 12 communication sub-areas, 1 to 12, and each of the communication sub-area is configured with a corresponding sending beam. In the embodiments of the present application, the sending beam is a PDCCH sending beam. It is determined that the terminal location belongs to communication sub-area 8 based on the location information of the terminal device, and a PDCCH sending beam 8 corresponding to the communication sub-area 8 is used as the PDCCH sending beam.

In the method for multi-antenna transmission provided by the embodiments of the present application, in case that the PDCCH signal is sent to the terminal device through the near-field antenna array, the PDCCH sending beam is formed by the beam focusing manner, so that energy of the signal is more concentrated, and the location information may be associated with the PDCCH sending beam, which may improve accuracy of beam pointing of the PDCCH sending beam and reduce the probability of beam failure.

In an embodiment, before sending the PDCCH signal, the method further includes:
sending second indication information to the terminal device, where the second indication information is used to indicate any one of:
the corresponding relationship between the communication sub-area and the PDCCH sending beam; or
the PDCCH sending beam.

In an embodiment, taking FIG. 7 as an example, for the corresponding relationship between the communication sub-area and the PDCCH sending beam, the second indication information may be used to indicate 12 communication sub-areas and their corresponding PDCCH sending beams. For example, communication sub-area 1 corresponds to PDCCH sending beam 1, communication sub-area 2 corresponds to PDCCH sending beam 2...

For the PDCCH sending beam, the network device forms the PDCCH sending beam based on the location information and by the beam focusing manner, and directly indicates the PDCCH sending beam to the terminal device. Taking FIG. 7 as an example, the network device sends the second indication information to the terminal device, and the second indication information is used to indicate PDCCH sending beam 8, such as the second indication information may include a beam index of PDCCH sending beam 8.

In the method for multi-antenna transmission provided by the embodiments of the present application, by sending the second indication information, a beam indication is sent to the terminal device in case that the PDCCH signal is sent to the terminal device through the near-field antenna array, so that the terminal device may determine the PDCCH sending beam based on the second indication information, and the terminal device may use a corresponding PDCCH receiving beam to receive the PDCCH signal sent from the network device.

In an embodiment, in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the method further includes:
obtaining location information of the terminal device, and forming the PDSCH sending beam based on the location information and by a beam focusing manner.

In an embodiment, the PDSCH sending beam has an association relationship with the location information, and the PDSCH sending beam is formed by the beam focusing manner.

In an embodiment, the sending time gap between the PDSCH signal and the PDCCH signal that schedules the PDSCH signal is less than or equal to the threshold, including the PDSCH signal and the PDCCH signal that schedules the PDSCH signal being transmitted simultaneously, which is same in the following and not repeated.

The threshold may be specified by a protocol, configured by the network device and indicated to the terminal device, or pre-agreed by the network device and the terminal device, the embodiments of the present application do not limit a specific value of the threshold or a determination way, which is same in the following and not repeated.

In an embodiment, forming the PDSCH sending beam based on the location information and by the beam focusing manner includes:
determining a communication sub-area to where the terminal device belongs based on the location information of the terminal device; and
using a beam, formed by beam focusing, corresponding to the communication sub-area where the terminal device belongs as the PDSCH sending beam,
where a corresponding relationship between the communication sub-area and the PDSCH sending beam is predefined.

The introduction of the communication sub-area refers to the above introduction, which is not repeated here.

The communication sub-area is configured with a corresponding PDSCH sending beam, that is, the corresponding relationship between the communication sub-area and the PDSCH beam is predefined. In an embodiment, the corresponding relationship between the communication sub-area and the PDSCH beam refers to a corresponding relationship between the communication sub-area and a beam corresponding to the communication sub-area and formed by beam focusing. That is, the beam corresponding to the communication sub-area and formed by beam focusing is predefined by the network device.

The network device obtains the location information of the terminal device, and the network device determines the communication sub-area where the terminal device belongs based on the location information, and uses the beam corresponding to the communication sub-area and formed by beam focusing as the PDSCH sending beam.

For example, FIG. 7 is a sixth schematic diagram of communication according to an embodiment of the present application. As shown in FIG. 7, taking a division of a part of the coverage area as an example, the network device divides a part of the coverage area into a total of 12 communication sub-areas, 1 to 12, and each of the communication sub-area is configured with a corresponding sending beam. In the embodiments of the present application, the sending beam is a PDSCH sending beam. It is determined that the terminal location belongs to communication sub-area 8 based on the location information of the terminal device, and a PDSCH sending beam 8 corresponding to the communication sub-area 8 is used as the PDSCH sending beam.

Accordingly, the terminal device selects a corresponding PDSCH receiving beam for reception based on the PDSCH sending beam 8.

For example, based on a beam direction of the PDSCH sending beam 8, the terminal device selects a PDSCH receiving beam opposite to the beam direction of the PDSCH sending beam 8 for reception.

In the method for multi-antenna transmission provided by the embodiments of the present application, in case that the PDSCH signal is sent through the near-field antenna array, the PDCCH signal that schedules the PDSCH signal is sent through the far-field antenna array, and a sending time gap between the PDSCH signal and the PDCCH signal that schedules the PDSCH signal is less than or equal to the threshold, the PDSCH sending beam is formed by the beam focusing manner, so that energy of the signal is more concentrated, and the location information may be associated with the PDSCH sending beam, which may improve accuracy of beam pointing of the PDSCH sending beam and reduce the probability of beam failure.

In an embodiment, before sending the PDSCH signal, the method further includes:
sending third indication information to the terminal device, where the third indication information is used to indicate any one of:
the corresponding relationship between the communication sub-area and the PDSCH sending beam; or
the PDSCH sending beam.

In an embodiment, taking FIG. 7 as an example, for the corresponding relationship between the communication sub-area and the PDSCH sending beam, the third indication information may be used to indicate the 12 communication sub-areas and their corresponding PDSCH sending beams. For example, communication sub-area 1 corresponds to PDSCH sending beam 1, communication sub-area 2 corresponds to PDSCH sending beam 2...

For the PDSCH sending beam, the network device forms the PDSCH sending beam based on the location information and by the beam focusing manner, and directly indicates the PDSCH sending beam to the terminal device. Taking FIG. 7 as an example, the network device sends the third indication information to the terminal device, and the third indication information is used to indicate PDSCH sending beam 8, such as the third indication information may include a beam index of PDSCH sending beam 8.

In the method for multi-antenna transmission provided by the embodiments of the present application, by sending the third indication information, a beam indication is sent to the terminal device in case that the PDSCH signal is sent to the terminal device through the near-field antenna array, so that the terminal device may determine the PDSCH sending beam based on the third indication information, and the terminal device may use a corresponding PDSCH receiving beam to receive the PDSCH signal sent from the network device.

In an embodiment, in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
where the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

In an embodiment, the PDSCH sending beam is the associated beam corresponding to the first PDCCH sending beam includes:
the associated beam is a same beam as the first PDCCH sending beam; or
the associated beam is a beam other than the first PDCCH sending beam and associated with the first PDCCH sending beam.

In an embodiment, in case that the PDSCH signal is sent through the near-field antenna array, the PDSCH sending beam is same as the first PDCCH sending beam, or there is an angle offset between the PDSCH sending beam and the first PDCCH sending beam, and the angle offset is determined by different spatial positions of different sub-arrays sending the PDSCH signal and the first PDCCH signal.

In an embodiment, in case that the PDSCH signal is sent through the far-field antenna array, there is a one-to-one correspondence between the PDSCH sending beam and the first PDCCH beam, and the difference between the PDSCH sending beam and the first PDCCH beam includes a beam difference between far-field beamforming and near-field beam focusing, and an angle difference caused by different spatial positions of different sub-arrays sending the PDSCH signal and the first PDCCH signal. In an embodiment, the PDSCH sending beam is obtained by far-field beamforming, and the first PDCCH beam is obtained by near-field beam focusing.

In an embodiment, in case that a sending time gap between the PDSCH signal and a PDCCH signal that schedules the PDSCH signal is greater than a threshold, the method further includes:
indicating the PDSCH sending beam to the terminal device through the PDCCH signal that schedules the PDSCH signal.

For example, in case that the sending time gap between the PDSCH signal and the PDCCH signal that schedules the PDSCH signal is greater than the threshold, a beam direction of the PDSCH sending beam is indicated by the PDCCH signal that schedules the PDSCH signal.

In an embodiment, the method further includes:
turning off antenna elements on a periphery of the far-field antenna array and/or the near-field antenna array.

In an embodiment, the antenna elements on the periphery of the far-field antenna array and/or the near-field antenna array are turned off.

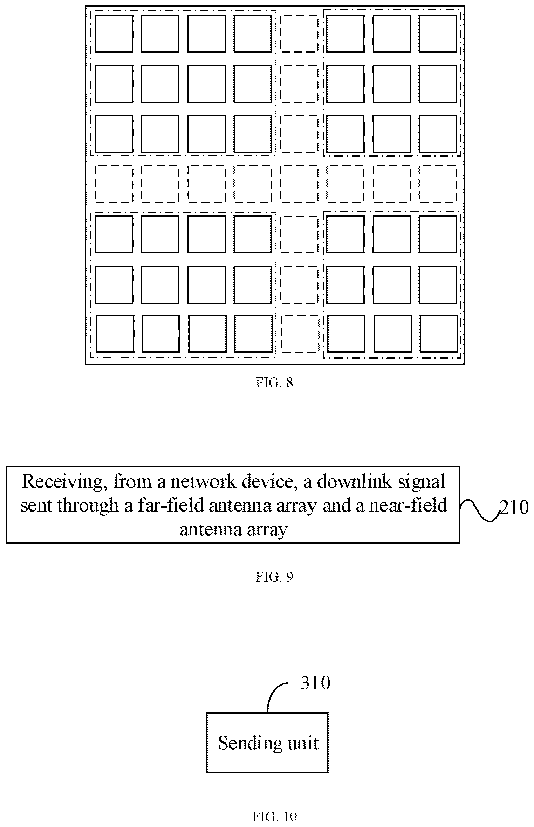

FIG. 8 is a schematic diagram of an ultra-large-scale antenna array according to an embodiment of the present application. As shown in FIG. 8, each small rectangle in the figure represents an antenna element, a solid line small rectangle represents a turned-on antenna element, multiple turned-on antenna elements in a dash-dotted frame represent a sub-array, and a dashed line small rectangle around a sub-array represents a turned-off antenna element.

The embodiments of the present application do not limit a number of turned-off antenna elements. P columns and/or Q rows of antenna elements around the far-field antenna array and/or the near-field antenna array may be turned off, where P is greater than or equal to 1 and Q is greater than or equal to 1.

In case that multiple sub-arrays are divided in the ultra-large-scale antenna array, if a distance between the multiple sub-arrays is same as a distance between antennas within the sub-arrays, interference between the sub-arrays may be caused. In the method for multi-antenna transmission provided by the embodiments of the present application, the antenna elements on the periphery of the sub-array (including the far-field antenna array and/or the near-field antenna array) are turned off, which increases a spacing between the sub-arrays, and reduces interference between the sub-arrays

FIG. 9 is a second schematic flowchart of a method for multi-antenna transmission according to an embodiment of the present application. As shown in FIG. 9, an embodiment of the present application provides a method for multi-antenna transmission, performed by a terminal device, including:
step 210: receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

In an embodiment, the introduction of the far-field antenna array, the near-field antenna array, and the downlink signal, refer to the above and is not repeated here.

For the PDCCH receiving beam, it refers to a beam used by the terminal device to receive the PDCCH signal, and the PDCCH receiving beam corresponds to the PDCCH sending beam, such as a beam direction of the PDCCH receiving beam corresponds to a beam direction of the PDCCH sending beam.

For the PDSCH receiving beam, it refers to a beam used by the terminal device to receive the PDSCH signal, and the PDSCH receiving beam corresponds to the PDSCH sending beam, such as a beam direction of the PDSCH receiving beam corresponds to a beam direction of the PDSCH sending beam.

In the method for multi-antenna transmission provided by the embodiments of the present application, the terminal device receives the downlink signal sent from the network device through the far-field antenna array and the near-field antenna array: under a near-field condition (the terminal device is in a near field), the beam may be focused to a specific position, achieving beam focusing, energy of the signal is more concentrated, and more users may be served at a same time; under a far-field condition (the terminal device is in a far field), an advantage of a large coverage area of a far-field beam is used to reduce a probability of beam failure caused by a small coverage area of near-field beam focusing. In the method for multi-antenna transmission provided by the embodiments of the present application, not only more power gain may be obtained and a system capacity may be improved by obtaining a beam focusing gain through the near-field antenna array, but also communication reliability may be improved and the probability of beam failure may be reduced by using the far-field antenna.

In an embodiment, before receiving, from the network device, the downlink signal sent through the far-field antenna array and the near-field antenna array, the method further includes:
receiving fourth indication information sent from the network device;
determining a sending manner of the downlink signal based on the fourth indication information;
determining a PDCCH sending beam and/or a PDSCH sending beam based on the sending manner of the downlink signal and beam indication information; and
determining the PDCCH receiving beam based on the PDCCH sending beam, and/or, determining the PDSCH receiving beam based on the PDSCH sending beam,
where the sending manner of the downlink signal includes being sent from the far-field antenna array or the near-field antenna array; and the beam indication information is received from the network device or pre-agreed between the terminal device and the network device.

In an embodiment, the terminal device determines that the sending manner of the downlink signal is being sent from the far-field antenna array or the near-field antenna array based on the fourth indication information.

For example, the downlink signal includes: PDSCH signal 1, PDCCH signal 1, PDSCH signal 2, and PDCCH signal 2, where PDCCH signal 1 is used to schedule PDSCH signal 1, and PDCCH signal 2 is used to schedule PDSCH signal 2; and
the fourth indication information indicates:
a sending manner of PDSCH signal 1 being sent from the near-field antenna array;
a sending manner of PDCCH signal 1 being sent from the far-field antenna array;
a sending manner of PDSCH signal 2 being sent from the far-field antenna array; and
a sending manner of PDCCH signal 2 being sent from the near-field antenna array.

For determining the PDCCH sending beam based on the sending manner of the PDCCH signal and the beam indication information:
in a possible implementation, for the PDCCH sending beam, multiple PDCCH sending beam configuration tables may be pre-stored, such as: a case that the sending manner of the PDCCH signal being sent from the far-field antenna array corresponds to PDCCH sending beam configuration table 1, and a case that the sending manner of the PDCCH signal being sent from the near-field line array corresponds to PDCCH sending beam configuration table 2.

The terminal device selects a corresponding PDCCH sending beam configuration table based on different sending manners of the PDCCH signal, and determines the PDCCH sending beam in the corresponding PDCCH sending beam configuration table based on the beam indication information.

In a possible implementation, for the PDCCH sending beam, a PDCCH sending beam configuration table may be pre-stored, and the terminal device selects a corresponding part of the table, such as a row in the table, in the PDCCH sending beam configuration table based on different sending manners of the PDCCH signal. The PDCCH sending beam is determined in the corresponding part of the table (such as a column) based on the beam indication information.

For determining the PDSCH sending beam:
in a possible implementation, for the PDSCH sending beam, multiple PDSCH sending beam configuration tables may be pre-stored, such as: a case that the sending manner of the PDSCH signal being sent from the near-field antenna array and the sending manner of the PDCCH signal that schedules the PDSCH being sent from the far-field antenna array corresponds to PDSCH sending beam configuration table 1, and a case that the sending manner of the PDCCH signal that schedules the PDSCH signal being sent from the near-field antenna array corresponds to PDSCH sending beam configuration table 2.

The terminal device selects a corresponding PDSCH sending beam configuration table based on different sending manners of the PDSCH signal and/or the PDCCH signal that schedules the PDSCH signal, and determines the PDSCH sending beam in the corresponding PDSCH sending beam configuration table based on the beam indication information.

In a possible implementation, for the PDSCH sending beam, a PDSCH sending beam configuration table may be pre-stored. The terminal device selects a corresponding part of the table, such as a row in the table, in the PDSCH sending beam configuration table based on different sending manners of the PDSCH signal and/or the PDCCH signal that schedules the PDSCH signal. The PDSCH sending beam is determined in the corresponding part of the table (such as a column) based on the beam indication information.

For the terminal device determining the PDCCH receiving beam based on the PDCCH sending beam, for example, the terminal device selects, based on a related parameter of the PDCCH sending beam, a corresponding receiving beam as the PDCCH receiving beam to receive the PDCCH signal. The related parameters may be a beam direction, a beam width, etc.; for example, the terminal device uses multiple PDCCH receiving beams to perform a reception measurement on the PDCCH sending beam, finds a best receiving beam, and uses the best receiving beam as the PDCCH receiving beam.

For the terminal device determining the PDSCH receiving beam based on the PDSCH sending beam, for example, the terminal device selects, based on a related parameter of the PDSCH sending beam, a corresponding receiving beam as the PDSCH receiving beam to receive the PDSCH signal. The related parameter may be a beam direction, a beam width, etc.; for example, the terminal device uses multiple PDSCH receiving beams to perform a reception measurement on the PDSCH sending beam, finds a best receiving beam, and uses the best receiving beam as the PDSCH receiving beam.

In the method for multi-antenna transmission provided by the embodiments of the present application, the PDCCH sending beam and/or the PDSCH sending beam is determined based on the sending manner of the downlink signal and the beam indication information; the PDCCH receiving beam is determined based on the PDCCH sending beam, and/or the PDSCH receiving beam is determined based on the PDSCH sending beam. In case that the near-field antenna array and the far-field antenna array are jointly used, a beam indication way is provided, and the terminal device may select a suitable receiving beam to receive the downlink signal.

In an embodiment, the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, for the sending content corresponding to the sub-array, it is sufficient to distinguish what kind of signal the sub-array is used to send, and it is not necessary to indicate specific content of the downlink signal sent from the sub-array.

For example, there are sub-array 1, sub-array 2, and sub-array 3, where sub-array 1 is used to send a PDCCH signal, sub-array 2 is used to send a PDSCH signal, and sub-array 3 is used to send a PDCCH signal and a PDSCH signal. It is not necessary to indicate the specific content indicated in the PDCCH signal.

For the sending manner of the PDSCH signal being sent from the far-field antenna array or the near-field antenna array, and the sending manner of the PDCCH signal being sent from the far-field antenna array or the near-field antenna array, refer to the above examples of PDSCH signal 1, PDCCH signal 1, PDSCH signal 2, and PDCCH signal 2.

In an embodiment, in case that the fourth indication information is used to indicate the division manner corresponding to the sub-array and the sending content corresponding to the sub-array, determining a sending manner of the downlink signal based on the fourth indication information includes:
based on the division manner corresponding to the sub-array and a distance between the terminal device and the network device, determining that the sub-array is the far-field antenna array or the near-field antenna array; and
based on the sub-array being the far-field antenna array or the near-field antenna array, and the sending content corresponding to the sub-array, determining the sending manner of the downlink signal.

In an embodiment, the terminal device determines the terminal device is within the far-field range or the near-field range based on the division manner corresponding to the sub-array and the distance between the terminal device and the network device; and then determines the sending manner of the downlink signal based on the sending content of the sub-array.

Taking FIG. 2 as an example, an index corresponding to an antenna array with a larger size is 1, and the terminal device determines that sub-array 1 (a sub-array with index 1) is a near-field antenna array based on the division manner corresponding to the sub-array and the distance between the terminal device and the network device. The fourth indication information indicates that sub-array 1 is used to send PDSCH signal 1, and the terminal device may determine that the sending manner of PDSCH signal 1 is being sent from a near-field antenna array. The far-field antenna array and the PDCCH signal refer to this embodiment, and is not repeated in the following.

The above examples are provided to facilitate understanding of the present application and shall not constitute any limitation to the present application.

In an embodiment, in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
determining the PDCCH sending beam includes:
   determining the PDCCH sending beam based on the second indication information.

In an embodiment, taking FIG. 7 as an example, for the corresponding relationship between the communication sub-area and the PDCCH sending beam, the second indication information may be used to indicate 12 communication sub-areas and their corresponding PDCCH sending beams. For example, communication sub-area 1 corresponds to PDCCH sending beam 1, communication sub-area 2 corresponds to PDCCH sending beam 2...

For the PDCCH sending beam, the network device forms the PDCCH sending beam based on the location information and by the beam focusing manner, and directly indicates the PDCCH sending beam to the terminal device. The second indication information received by the terminal device directly indicates the PDCCH sending beam. Taking FIG. 7 as an example, the network device sends the second indication information to the terminal device, and the second indication information is used to indicate PDCCH sending beam 8, such as the second indication information may include a beam index of PDCCH sending beam 8.

In the method for multi-antenna transmission provided by the embodiments of the present application, by receiving the second indication information, the terminal device may determine the PDCCH sending beam based on the second indication information, and the terminal device may use the corresponding PDCCH receiving beam to receive the PDCCH signal sent from the network device.

In an embodiment, in case that the second indication information is used to indicate the corresponding relationship between the communication sub-area and the PDCCH sending beam, determining the PDCCH sending beam based on the second indication information includes:
determining the communication sub-area where the terminal device belongs based on location information of the terminal device; and
determining the PDCCH sending beam based on the communication sub-area where the terminal device belongs and the corresponding relationship between the communication sub-area and the PDCCH sending beam.

The introduction of the communication sub-area refers to the above introduction and is not repeated here.

The communication sub-area is configured with a corresponding PDCCH sending beam, that is, the corresponding relationship between the communication sub-area and the PDCCH beam is predefined. In an embodiment, the corresponding relationship between the communication sub-area and the PDCCH beam is predefined by the network device, and the corresponding relationship between the communication sub-area and the PDCCH beam is received by the terminal device from the network device.

The terminal device determines the communication sub-area where the terminal device belongs based on its own location information, and uses the beam corresponding to the communication sub-area and formed by beam focusing as the PDCCH sending beam.

For example, FIG. 7 is a sixth schematic diagram of communication according to an embodiment of the present application. As shown in FIG. 7, taking a division of a part of the coverage area as an example, the network device divides a part of the coverage area into a total of 12 communication sub-areas, 1 to 12, and each of the communication sub-area is configured with a corresponding sending beam. In the embodiments of the present application, the sending beam is a PDCCH sending beam. The terminal device determines that the terminal device belongs to communication sub-area 8 by itself based on the location information of the terminal device, and a PDCCH sending beam 8 corresponding to the communication sub-area 8 is used as the PDCCH sending beam.

The terminal device selects the corresponding PDCCH receiving beam for reception based on the PDCCH sending beam 8.

For example, the terminal device selects a PDCCH receiving beam opposite to a beam direction of the PDCCH sending beam 8 for reception based on the beam direction of the PDCCH sending beam 8.

In the method for multi-antenna transmission provided by the embodiments of the present application, a method for receiving the PDCCH signal in case that the terminal is in the near-field is provided: the terminal device determines the PDCCH sending beam through the location information, then determines the corresponding PDCCH receiving beam, and may associate the location information with the PDCCH sending beam. The terminal device may quickly and accurately determine the PDCCH sending beam based on the location information and then determine the corresponding PDCCH receiving beam, which reduces a probability of signal reception failure.

In an embodiment, in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
determining the PDSCH sending beam includes:
   determining the PDSCH sending beam based on the third indication information.

In an embodiment, taking FIG. 7 as an example, for the corresponding relationship between the communication sub-area and the PDSCH sending beam, the third indication information may be used to indicate the 12 communication sub-areas and their corresponding PDSCH sending beams. For example, communication sub-area 1 corresponds to PDSCH sending beam 1, communication sub-area 2 corresponds to PDSCH sending beam 2...

For the PDSCH sending beam, the network device forms the PDSCH sending beam based on the location information and by the beam focusing manner, and directly indicates the PDSCH sending beam to the terminal device. The third indication information received by the terminal device directly indicates that the PDSCH sends the beam. The third indication information received by the terminal device directly indicates the PDSCH sending beam. Taking FIG. 7 as an example, the network device sends the third indication information to the terminal device, and the third indication information is used to indicate PDSCH sending beam 8, such as the third indication information may include a beam index of PDSCH sending beam 8.

In the method for multi-antenna transmission provided by the embodiments of the present application, the terminal device may determine the PDSCH sending beam based on the third indication information by receiving the third indication information, so that the terminal device may use the corresponding PDSCH receiving beam to receive the PDSCH signal sent from the network device.

In an embodiment, in case that the third indication information is used to indicate the corresponding relationship between the communication sub-area and the PDSCH sending beam, determining the PDSCH sending beam based on the third indication information includes:
determining the communication sub-area where the terminal device belongs based on location information of the terminal device; and
determining the PDSCH sending beam based on the communication sub-area where the terminal device belongs and the corresponding relationship between the communication sub-area and the PDSCH sending beam.

The introduction of the communication sub-area refers to the above introduction and is not repeated here.

The communication sub-area is configured with a corresponding PDSCH sending beam, that is, the corresponding relationship between the communication sub-area and the PDSCH beam is predefined. In an embodiment, the corresponding relationship between the communication sub-area and the PDSCH beam is predefined by the network device, and the corresponding relationship between the communication sub-area and the PDSCH beam is received by the terminal device from the network device.

The terminal device determines the communication sub-area where the terminal device belongs based on its own location information, and uses the beam corresponding to the communication sub-area and formed by beam focusing as the PDSCH sending beam.

For example, FIG. 7 is a sixth schematic diagram of communication according to an embodiment of the present application. As shown in FIG. 7, taking a division of a part of the coverage area as an example, the network device divides a part of the coverage area into a total of 12 communication sub-areas, 1 to 12, and each of the communication sub-area is configured with a corresponding sending beam. In the embodiments of the present application, the sending beam is a PDSCH sending beam. is the terminal device determines that the terminal device belongs to communication sub-area 8 by itself based on the location information of the terminal device, and a PDSCH sending beam 8 corresponding to the communication sub-area 8 is used as the PDSCH sending beam.

The terminal device selects the corresponding PDSCH receiving beam for reception based on the PDSCH sending beam 8.

For example, the terminal device selects a PDSCH receiving beam opposite to a beam direction of the PDSCH sending beam 8 for reception based on the beam direction of the PDSCH sending beam 8.

In the method for multi-antenna transmission provided by the embodiments of the present application, a method for receiving the PDSCH signal in case that the terminal is in the near-field is provided: the terminal device determines the PDSCH sending beam through the location information, then determines the corresponding PDSCH receiving beam, and may associate the location information with the PDSCH sending beam. The terminal device may quickly and accurately determine the PDSCH sending beam based on the location information and then determine the corresponding PDSCH receiving beam, which reduces a probability of signal reception failure.

In an embodiment, in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

In an embodiment, the PDCCH signal that schedules the PDSCH signal is used to indicate the beam direction of the PDSCH sending beam, and the terminal device selects the receiving beam corresponding to the beam direction of the PDSCH sending beam as the PDSCH receiving beam.

In an embodiment, in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
determining the PDSCH sending beam includes:
determining the PDSCH sending beam based on the first PDCCH sending beam, and the association relationship between the first PDCCH sending beam and the PDSCH sending beam,
where the first PDCCH sending beam is used to send the PDCCH signal that schedules the PDSCH signal.

In an embodiment, before receiving, from the network device, the downlink signal sent through the far-field antenna array and the near-field antenna array, the method further includes:
receiving first indication information sent from the network device, where the first indication information is used to indicate periodic sending of the downlink signal; and
receiving, from the network device, the downlink signal sent through the far-field antenna array and the near-field antenna array includes:
   periodically receiving, based on the first indication information, the downlink signal sent from the network device through the far-field antenna array and the near-field antenna array.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

The introduction of the first indication information refers to the above introduction and is not repeated here.

In an embodiment, the terminal device is configured with at least one panel, and different panels are used to receive different beams.

In an embodiment, the terminal device is configured with multiple panels for receiving beams from at least one sub-array.

The present application is introduced below in conjunction with multiple embodiments.

Embodiment 1: a method for indicating or determining a sending beam for downlink signals of different sending manners is as follows.

Case 1: in case that the network device sends the PDCCH signal to the terminal device through the near-field antenna array:
the network device forms the PDCCH sending beam based on the location information of the terminal device and by the beam focusing manner, and the network device indicates the PDCCH sending beam to the terminal device; or
the terminal device forms the PDCCH sending beam based on the location information of the terminal device and by the beam focusing manner.

Case 2: in case that the network device sends the PDCCH signal through the far-field antenna array:
the PDCCH sending beam may be associated with a control resource set (CORESET); and
in case that the network device sends the PDCCH signal through the far-field antenna array, the terminal device performs blind detection in multiple configured CORESETs when receiving the PDCCH sending beam; for each candidate CORESET, the terminal device uses the PDCCH receiving beam corresponding to the PDCCH sending beam for reception, where the PDCCH sending beam corresponds to the CORESET.

Case 3: in case that the PDCCH signal that schedules the PDSCH signal is sent through the near field, the PDSCH signal is sent through the near-field antenna array, and the sending time gap between the PDSCH signal and the PDCCH signal that schedules the PDSCH signal is less than or equal to a threshold:
the PDSCH sending beam is an associated beam corresponding to the first PDCCH sending beam.

Case 4: in case that the PDCCH signal that schedules the PDSCH signal is sent through the near field, the PDSCH signal is sent through the near-field antenna array, and the sending time gap between the PDSCH signal and the PDCCH signal that schedules the PDSCH signal is greater than a threshold:
the network device indicates the PDSCH sending beam to the terminal device through the PDCCH signal that schedules the PDSCH signal; and
the terminal device determines the PDSCH sending beam based on the indication of the PDCCH signal that schedules the PDSCH signal.

Case 5: in case that the PDCCH signal that schedules the PDSCH signal is sent through the near field, the PDSCH signal is sent through the far-field antenna array, and the sending time gap between the PDSCH signal and the PDCCH signal that schedules the PDSCH signal is less than or equal to a threshold:
the PDSCH sending beam is an associated beam corresponding to the first PDCCH sending beam.

Case 6: in case that the PDCCH signal that schedules the PDSCH signal is sent through the near field, the PDSCH signal is sent through the far-field antenna array, and the sending time gap between the PDSCH signal and the PDCCH signal that schedules the PDSCH signal is greater than a threshold:
the network device indicates the PDSCH sending beam to the terminal device through the PDCCH signal that schedules the PDSCH signal; and
the terminal device determines the PDSCH sending beam based on the indication of the PDCCH signal that schedules the PDSCH signal.

Case 7: in case that the PDCCH signal that schedules the PDSCH signal is sent through the far-field antenna array, the PDSCH signal is sent through the near-field antenna array, and the sending time gap between the PDSCH signal and the PDCCH signal that schedules the PDSCH signal is less than or equal to a threshold:
the network device forms the PDSCH sending beam based on the location information of the terminal device and by the beam focusing manner, and the network device indicates the PDSCH sending beam to the terminal device; or
the terminal device forms the PDSCH sending beam based on the location information of the terminal device and by the beam focusing manner.

Case 8: in case that the PDCCH signal that schedules the PDSCH signal is sent through the far-field antenna array, the PDSCH signal is sent through the near-field antenna array, and the sending time gap between the PDSCH signal and the PDCCH signal that schedules the PDSCH signal is greater than a threshold:
the network device indicates the PDSCH sending beam to the terminal device through the PDCCH signal that schedules the PDSCH signal; and
the terminal device determines the PDSCH sending beam based on the indication of the PDCCH signal that schedules the PDSCH signal.

Case 9: in case that the PDCCH signal that schedules the PDSCH signal is sent through the far-field antenna array, the PDSCH signal is sent through the far-field antenna array, and the sending time gap between the PDSCH signal and the PDCCH signal that schedules the PDSCH signal is less than or equal to a threshold:
the PDSCH sending beam is a same beam as the PDCCH.

Case 10: in case that the PDCCH signal that schedules the PDSCH signal is sent through the far-field antenna array, the PDSCH signal is sent through the far-field antenna array, and the sending time gap between the PDSCH signal and the PDCCH signal that schedules the PDSCH signal is greater than a threshold:
the network device indicates the PDSCH sending beam to the terminal device through the PDCCH signal that schedules the PDSCH signal; and
the terminal device determines the PDSCH sending beam based on the indication of the PDCCH signal that schedules the PDSCH signal.

Embodiment 2: different sub-arrays send different downlink signals.

Steps performed by the network device side include:
the network device divides its ultra-large-scale antenna array into multiple sub-arrays of different sizes;
as shown in FIG. 2, the network device selects a far-field antenna array that makes the terminal device in the far field to send the PDCCH signal, so that the PDCCH sending beam is directed to the terminal to improve the reliability of the PDCCH sending beam; and
as shown in FIG. 2, the network device selects a near-field antenna array that makes the terminal device in the near field to send the PDSCH signal, so that the PDSCH sending beam is focused on the terminal device, and the PDSCH sending beam can obtain more power gain.

Steps performed by the terminal device side include:
the terminal device is configured with multiple panels for receiving beams from multiple sub-arrays, and the terminal device receives the signal sent from the network device and demodulates the received signal.

Embodiment 3: a way for sending different downlink signals in a time-division manner using the entire ultra-large-scale antenna array and different sub-arrays is as follows.

Steps performed by the network device side include the following.

Step 1: the network device, such as a base station, divides its ultra-large-scale antenna array into multiple sub-arrays of a same or different sizes.

Step 2: as shown in FIG. 3, within a first time length unit (for example, a time length unit such as a slot, a symbol, or a subframe), the base station uses the entire ultra-large-scale antenna array to send the PDCCH signal and the PDSCH signal, so that the beam is focused on the terminal, to improve the power gain of the PDCCH sending beam and the PDSCH sending beam within the first time length unit, and obtain a larger system capacity.

Step 3: as shown in FIG. 4, within the second time length unit (for example, a time length unit such as a slot, a symbol, or a subframe), the base station selects a sub-array that makes the terminal in the far field to send the PDCCH signal, to improve the reliability of the transmission of the PDCCH signal; the base station selects the remaining sub-arrays that make the terminal in the far field to send the PDSCH signal to improve the reliability of PDSCH transmission within the second time length unit.

In an embodiment, the first time length unit and the second time length unit constitute a period.

In an embodiment, the operation of the base station within the first time length unit and the operation of the base station within the second time length unit may be interchanged.

In an embodiment, the base station periodically sends the PDCCH signal and the PDSCH signal in the way described in step 2 and step 3.

Steps performed by the terminal device side include the following.

Step 1: the terminal device receives the PDCCH signal and the PDSCH signal from the entire ultra-large-scale antenna array within the first time length unit, and the PDCCH signal from multiple sub-arrays within the second time length unit.

In an embodiment, the terminal device periodically receives signals based on the first period, that is, the terminal device receives the PDCCH signal and the PDSCH signal from the entire ultra-large-scale antenna array in the first time length unit of each first period, and receives the PDCCH signal from multiple sub-arrays in the second time length unit of each first period.

Step 2: the terminal device demodulates the received signal.

In an embodiment, after the terminal device receives a signal, such as PDCCH signal 1, the terminal device may demodulate after receiving PDCCH signal 1, without waiting for other signals to be received before demodulating PDCCH signal 1.

Embodiment 4: a way for sending different downlink signals in a time-division manner by different sub-arrays is as follows.

Steps performed by the network device side include the following.

Step 1: the network device, such as a base station, divides its ultra-large-scale antenna array into multiple sub-arrays of different sizes.

Step 2: as shown in FIG. 2, within the third time length unit (for example, a time length unit such as a slot, a symbol, or a subframe), the base station selects a sub-array (i.e., a smaller sub-array) that makes the terminal in the far field to send the PDCCH signal, so that the beam is directed to the terminal to improve the reliability of the PDCCH; the base station selects a sub-array (i.e., a larger subarray) that makes the terminal in the near field to send the PDSCH signal, so that the beam is focused on the terminal, and the PDSCH can obtain more power gain.

Step 3: as shown in FIG. 5, within the fourth time length unit (for example, a time length unit such as a slot, a symbol, or a subframe), the base station selects a sub-array that makes the terminal in the far field to send the PDCCH signal, to improve the reliability of the transmission of the PDCCH signal; the base station selects the remaining sub-arrays that make the terminal in the far field to send the PDSCH signal to improve the reliability of PDSCH transmission within the first time length unit.

In an embodiment, the third time length unit and the fourth time length unit constitute a period, where the operation of the base station within the third time length unit and the operation of the base station within the fourth time length unit may be interchanged.

In an embodiment, the base station periodically sends the PDCCH signal and the PDSCH signal in the way described in steps 2 and 3.

Steps performed by the terminal device side include the following.

Step 1: the terminal device receives the PDCCH signal and the PDSCH signal from multiple sub-arrays (including far-field antenna arrays and near-field antenna arrays) within the third time length unit, and receives the PDCCH signal and the PDSCH signal from different sub-arrays that all work within the far-field range within the fourth time length unit.

In an embodiment, the terminal device periodically receives signals based on the second period, that is, the terminal device receives PDCCH signal and the PDSCH signal from multiple subarrays (including far-field antenna arrays and near-field antenna arrays) within the third time length unit of each second period, and receives the PDCCH signal and the PDSCH signal from different sub-arrays that all work within the far-field range within the fourth time length unit of each second period.

Step 2: the terminal device demodulates the received signal.

In an embodiment, after the terminal device receives a signal, such as PDSCH signal 1, the terminal device may demodulate after receiving PDSCH signal 1, without waiting for other signals to be received before demodulating PDSCH signal 1.

Embodiment 5: in this embodiment, the PDCCH signal and the PDSCH signal are sent in a time-division and sub-array division manner.

Taking the network device being a base station as an example, steps performed by the base station side include the following.

Step 1: the base station divides the sub-arrays.

The time length unit is a slot.

As shown in FIG. 2, in a first slot, the base station divides the entire panel into two sub-arrays of different sizes, where a smaller sub-array is a far-field antenna array, which makes the terminal in the far-field range; and a larger sub-array is a near-field antenna array, which makes the terminal in the near-field range.

In an embodiment, antenna elements on the periphery of the sub-arrays are turned off to increase spacing between the sub-arrays and reduce interference between the sub-arrays.

As shown in FIG. 5, in a second slot, the base station divides the entire panel into four sub-arrays of different sizes, each of which enables the terminal to work in the far field.

In an embodiment, antenna elements on the periphery of the sub-arrays are turned off to increase spacing between the sub-arrays and reduce interference between the sub-arrays.

Step 2: the base station sends a signal.

As shown in FIG. 2, in the first slot, the smaller sub-array (far-field antenna array) working in the far field is used to send the PDCCH signal; the larger sub-array (near-field antenna array) working in the near field is used to send the PDSCH signal.

As shown in FIG. 5, in the second slot, one of the sub-arrays (far-field antenna array) working in the far field is selected to send the PDCCH signal; the remaining sub-arrays (far-field antenna arrays) working in the far field are used to send the PDSCH signal.

Step 3: the base station performs beam indication.

In the first slot, the beam indication way for the far-field PDCCH sending beam is:
the PDCCH sending beam is associated with the control resource set (CORESET).

In the first slot, the beam indication way for the near-field PDSCH sending beam is:
the base station divides its coverage area into multiple communication sub-areas, and the area of the communication sub-area is less than or equal to the range of beam focusing;
the base station configures a corresponding PDSCH sending beam for each divided communication sub-area;
the base station obtains the location information of the terminal; and
the base station determines the PDSCH sending beam used for beam focusing based on the location information.

In the second slot, the beam indication way for the far-field PDCCH sending beam is:
the PDCCH sending beam is associated with the control resource set (CORESET).

In the second slot, the beam indication way for the far-field PDSCH transmit beam is:
since the area of the antenna array is large, the beam directions of different sub-arrays hitting the same terminal may not be completely consistent, the base station calculates the corresponding PDSCH sending beam based on the position relationship between different sub-arrays and the PDCCH sending beam, and obtains the corresponding relationship between the PDCCH beam and the PDSCH beam.

Steps performed by the terminal device side include the following.

Step 1: the terminal device performs reception.

Reception of the PDCCH signal in the first slot:
when receiving, the terminal device performs blind detection in multiple CORESETs of a configured PDCCH sending beam; and for each candidate CORESET, the terminal device uses a receiving beam corresponding to a sending beam of this CORESET for reception.

Reception of the PDSCH signal in the first slot:
the terminal device determines a receiving beam corresponding to the PDSCH sending beam of the base station based on the location information of the terminal device and performs reception.

Reception of the PDCCH signal in the second slot:
when receiving, the terminal device performs blind detection in multiple CORESETs of a configured PDCCH sending beam; and for each candidate CORESET, the terminal device uses a receiving beam corresponding to a sending beam of this CORESET for reception.

Reception of the PDSCH signal in the second slot:
the terminal device first determines the sending beam of PDSCH based on the corresponding relationship between the PDCCH sending beam and the PDSCH sending beam, and then determines the receiving beam of the PDSCH based on the PDSCH sending beam.

Step 2: the terminal device demodulates the received signal.

In an embodiment, after the terminal device receives a signal, such as PDSCH signal 1, the terminal device may demodulate after receiving PDSCH signal 1, without waiting for other signals to be received before demodulating PDSCH signal 1.

In the method for multi-antenna transmission provided by the embodiments of the present application, the base station divides the ultra-large-scale antenna array into multiple sub-arrays, the base station selects the sub-array that makes the terminal in the far field to send a signal with a higher reliability requirement to improve reliability; the base station selects the sub-array that makes the terminal in the near field to send a signal with a higher data rate requirement to improve system capacity; and the base station may switch the near field and the far field in a time-division manner to reduce the probability of beam failure, which may ensure the reliability of transmission without causing a significant impact on the transmission rate.

Referring to FIG. 10, FIG. 10 is a first schematic structural diagram of an apparatus for multi-antenna transmission according to an embodiment of the present application. An embodiment of the present application provides an apparatus for multi-antenna transmission, for use in a network device, including: a sending unit 310, where
the sending unit 310 is used for sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

In an embodiment, the far-field antenna array and the near-field antenna array are obtained by the network device dividing an ultra-large-scale antenna array.

In an embodiment, the sending unit 310 is used for sending the downlink signal to the terminal device through the far-field antenna array and the near-field antenna array includes:
the sending unit 310 is used for sending the PDCCH signal through the far-field antenna array; and
the sending unit 310 is used for sending the PDSCH signal through the near-field antenna array.

In an embodiment, the sending unit 310 is used for sending the downlink signal to the terminal device through the far-field antenna array and the near-field antenna array includes:
the sending unit 310 is used for, in a first time length unit, sending the PDCCH signal and the PDSCH signal through the near-field antenna array; and
the sending unit 310 is used for, in a second time length unit, sending the PDCCH signal and the PDSCH signal respectively through different far-field antenna arrays.

In an embodiment, the near-field antenna array is an ultra-large-scale antenna array.

In an embodiment, the sending unit 310 is used for sending the PDCCH signal and the PDSCH signal through the near-field antenna array includes:
the sending unit 310 is used for sending the PDCCH signal and the PDSCH signal in a time division, frequency division or time-frequency division manner.

In an embodiment, the first time length unit and the second time length unit constitute a first period; and
the sending unit 310 is used for sending the downlink signal to the terminal device through the far-field antenna array and the near-field antenna array includes:
the sending unit 310 is used for periodically sending the downlink signal based on the first period.

In an embodiment, the sending unit 310 is used for sending the downlink signal to the terminal device through the far-field antenna array and the near-field antenna array includes:
the sending unit 310 is used for, in a third time length unit, sending the PDCCH signal through the far-field antenna array and sending the PDSCH signal through the near-field antenna array; and
the sending unit 310 is used for, in a fourth time length unit, sending the PDCCH signal and the PDSCH signal respectively through different far-field antenna arrays.

In an embodiment, the third time length unit and the fourth time length unit constitute a second period; and
the sending unit 310 is used for sending the downlink signal to the terminal device through the far-field antenna array and the near-field antenna array includes:
the sending unit 310 is used for periodically sending, based on the second period, the downlink signal to the terminal device.

In an embodiment, the sending unit 310 is further used for, before sending the downlink signal to the terminal device, sending first indication information to the terminal device, where the first indication information is used to indicate periodic sending of the downlink signal.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, in case that the PDCCH signal is sent to the terminal device through the near-field antenna array, the apparatus further includes a first sending beam determining unit, where
the first sending beam determining unit is used for obtaining location information of the terminal device, and forming the PDCCH sending beam based on the location information and by a beam focusing manner.

In an embodiment, the first sending beam determining unit is used for forming the PDCCH sending beam based on the location information and by the beam focusing manner includes:
the first sending beam determining unit is used for determining a communication sub-area where the terminal device belongs based on the location information; and
the first sending beam determining unit is used for using a beam, formed by beam focusing, corresponding to the communication sub-area where the terminal device belongs as the PDCCH sending beam,
where a corresponding relationship between the communication sub-area and the PDCCH sending beam is predefined.

In an embodiment, the sending unit 310 is further used for, before sending the PDCCH signal, sending second indication information to the terminal device, where the second indication information is used to indicate any one of:
the corresponding relationship between the communication sub-area and the PDCCH sending beam; or
the PDCCH sending beam.

In an embodiment, in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
where the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

In an embodiment, in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the apparatus further includes a second sending beam determining unit, where
the second sending beam determining unit is used for obtaining location information of the terminal device, and forming the PDSCH sending beam based on the location information and by a beam focusing manner.

In an embodiment, the second sending beam determining unit is used for forming the PDSCH sending beam based on the location information and by the beam focusing manner includes:
the second sending beam determining unit is used for determining a communication sub-area to where the terminal device belongs based on the location information of the terminal device; and
the second sending beam determining unit is used for using a beam, formed by beam focusing, corresponding to the communication sub-area where the terminal device belongs as the PDSCH sending beam,
where a corresponding relationship between the communication sub-area and the PDSCH sending beam is predefined.

In an embodiment, the sending unit 310 is used for, before sending the PDSCH signal, sending third indication information to the terminal device, where
the third indication information is used to indicate any one of:
the corresponding relationship between the communication sub-area and the PDSCH sending beam; or
the PDSCH sending beam.

In an embodiment, in case that a sending time gap between the PDSCH signal and a PDCCH signal that schedules the PDSCH signal is greater than a threshold, the apparatus further includes a first indicating unit, where
the first indicating unit is used for indicating the PDSCH sending beam to the terminal device through the PDCCH signal that schedules the PDSCH signal.

In an embodiment, the sending unit 310 is further used for, before sending the downlink signal, sending fourth indication information to the terminal device, where
the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, the apparatus further includes a turning-off unit, where
the turning-off unit is used for turning off antenna elements on a periphery of the far-field antenna array and/or the near-field antenna array.

The methods and apparatuses provided by the embodiments of the present application are based on the same conception, and the implementation of the apparatuses and methods may be referred to each other since the principles of the methods for multi-antenna transmission performed by the network device and the apparatuses for multi-antenna transmission for use in the network device are similar, and are not repeated here.

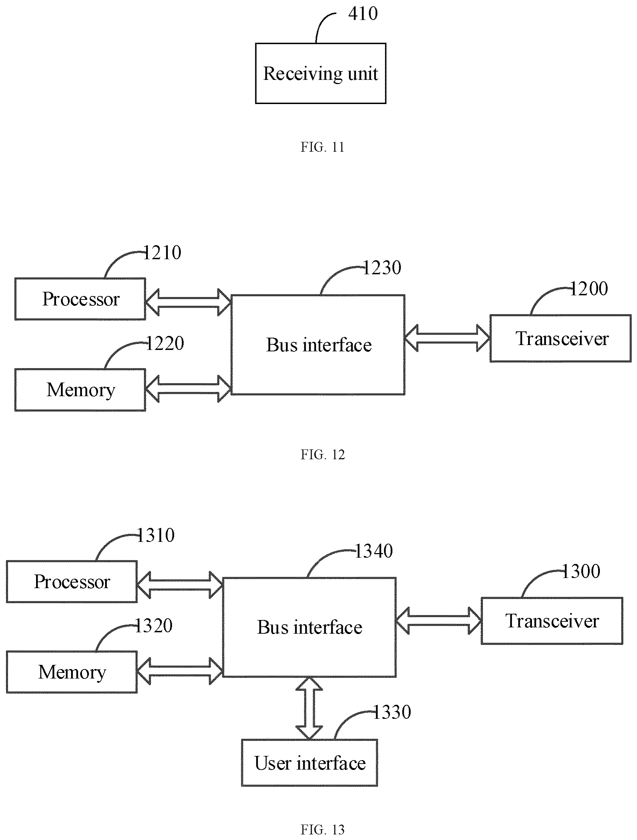

Referring to FIG. 11, FIG. 11 is a second schematic structural diagram of an apparatus for multi-antenna transmission according to an embodiment of the present application. An embodiment of the present application provides an apparatus for multi-antenna transmission, for use in a terminal device, including: a receiving unit 410, where
the receiving unit 410 is used for receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

In an embodiment, the apparatus further includes: a sending manner determining unit, a third sending beam determining unit, and a receiving beam determining unit, where
the receiving unit 410 is further used for receiving fourth indication information sent from the network device;
the sending manner determining unit is used for determining a sending manner of the downlink signal based on the fourth indication information;
the third sending beam determining unit is used for determining a PDCCH sending beam and/or a PDSCH sending beam based on the sending manner of the downlink signal and beam indication information; and
the receiving beam determining unit is used for determining the PDCCH receiving beam based on the PDCCH sending beam, and/or, determining the PDSCH receiving beam based on the PDSCH sending beam,
where the sending manner of the downlink signal includes being sent from the far-field antenna array or the near-field antenna array; and the beam indication information is received from the network device or pre-agreed between the terminal device and the network device.

In an embodiment, the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, in case that the fourth indication information is used to indicate the division manner corresponding to the sub-array and the sending content corresponding to the sub-array, the sending manner determining unit is used for determining a sending manner of the downlink signal based on the fourth indication information includes:
the sending manner determining unit is used for, based on the division manner corresponding to the sub-array and a distance between the terminal device and the network device, determining that the sub-array is the far-field antenna array or the near-field antenna array; and
the sending manner determining unit is used for, based on the sub-array being the far-field antenna array or the near-field antenna array, and the sending content corresponding to the sub-array, determining the sending manner of the downlink signal.

In an embodiment, in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
the third sending beam determining unit is used for determining the PDCCH sending beam includes:
   the third sending beam determining unit is used for determining the PDCCH sending beam based on the second indication information.

In an embodiment, in case that the second indication information is used to indicate the corresponding relationship between the communication sub-area and the PDCCH sending beam, the third sending beam determining unit is used for determining the PDCCH sending beam based on the second indication information includes:
the third sending beam determining unit is used for determining the communication sub-area where the terminal device belongs based on location information of the terminal device; and
the third sending beam determining unit is used for determining the PDCCH sending beam based on the communication sub-area where the terminal device belongs and the corresponding relationship between the communication sub-area and the PDCCH sending beam.

In an embodiment, in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
the third sending beam determining unit is used for determining the PDSCH sending beam includes:
   the third sending beam determining unit is used for determining the PDSCH sending beam based on the third indication information.

In an embodiment, in case that the third indication information is used to indicate the corresponding relationship between the communication sub-area and the PDSCH sending beam, the third sending beam determining unit is used for determining the PDSCH sending beam based on the third indication information includes:
the third sending beam determining unit is used for determining the communication sub-area where the terminal device belongs based on location information of the terminal device; and
the third sending beam determining unit is used for determining the PDSCH sending beam based on the communication sub-area where the terminal device belongs and the corresponding relationship between the communication sub-area and the PDSCH sending beam.

In an embodiment, in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

In an embodiment, in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
the third sending beam determining unit is used for determining the PDSCH sending beam includes:
the third sending beam determining unit is used for determining the PDSCH sending beam based on the first PDCCH sending beam, and the association relationship between the first PDCCH sending beam and the PDSCH sending beam,
where the first PDCCH sending beam is used to send the PDCCH signal that schedules the PDSCH signal.

In an embodiment, before receiving, from the network device, the downlink signal sent through the far-field antenna array and the near-field antenna array:
the receiving unit 410 is further used for receiving first indication information sent from the network device, where the first indication information is used to indicate periodic sending of the downlink signal; and
the receiving unit 410 is used for receiving, from the network device, the downlink signal sent through the far-field antenna array and the near-field antenna array includes:
   the receiving unit 410 is used for, periodically receiving, based on the first indication information, the downlink signal sent from the network device through the far-field antenna array and the near-field antenna array.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, the terminal device is configured with at least one panel, and different panels are used to receive different beams.

The methods and apparatuses provided by the embodiments of the present application are based on the same conception, and the implementation of the apparatuses and methods may be referred to each other since the principles of the methods for multi-antenna transmission performed by the terminal device and the apparatuses for multi-antenna transmission for use in the terminal device are similar, and are not repeated here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

FIG. 12 is a schematic structural diagram of a network device according to an embodiment of the present application. As shown in FIG. 12, the network device includes a memory 1220, a transceiver 1200 and a processor 1210, where
the memory 1220 is used for storing a computer program, the transceiver 1200 is used for receiving and sending data under control of the processor 1210, and the processor 1210 is used for reading the computer program in the memory 1220 and performing following operations:
sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

In an embodiment, the transceiver 1200 is used for receiving and sending data under control of the processor 1210.

In FIG. 12, a bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface 1230 provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field-programmable gate array (FPGA), or a complex programmable logic device (CPLD), the processor may also use a multi-core architecture.

In an embodiment, the far-field antenna array and the near-field antenna array are obtained by the network device dividing an ultra-large-scale antenna array.

In an embodiment, sending the downlink signal to the terminal device through the far-field antenna array and the near-field antenna array includes:
sending the PDCCH signal through the far-field antenna array; and
sending the PDSCH signal through the near-field antenna array.

In an embodiment, sending the downlink signal to the terminal device through the far-field antenna array and the near-field antenna array includes:
in a first time length unit, sending the PDCCH signal and the PDSCH signal through the near-field antenna array;
   and
in a second time length unit, sending the PDCCH signal and the PDSCH signal respectively through different far-field antenna arrays.

In an embodiment, the near-field antenna array is an ultra-large-scale antenna array.

In an embodiment, sending the PDCCH signal and the PDSCH signal through the near-field antenna array includes:
sending the PDCCH signal and the PDSCH signal in a time division, frequency division or time-frequency division manner.

In an embodiment, the first time length unit and the second time length unit constitute a first period; and
sending the downlink signal to the terminal device through the far-field antenna array and the near-field antenna array includes:
periodically sending the downlink signal based on the first period.

In an embodiment, sending the downlink signal to the terminal device through the far-field antenna array and the near-field antenna array includes:
in a third time length unit, sending the PDCCH signal through the far-field antenna array and sending the PDSCH signal through the near-field antenna array; and
in a fourth time length unit, sending the PDCCH signal and the PDSCH signal respectively through different far-field antenna arrays.

In an embodiment, the third time length unit and the fourth time length unit constitute a second period; and
sending the downlink signal to the terminal device through the far-field antenna array and the near-field antenna array includes:
periodically sending, based on the second period, the downlink signal to the terminal device.

In an embodiment, before sending the downlink signal to the terminal device, the operations further include:
sending first indication information to the terminal device, where the first indication information is used to indicate periodic sending of the downlink signal.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, in case that the PDCCH signal is sent to the terminal device through the near-field antenna array, the operations further include:
obtaining location information of the terminal device, and forming the PDCCH sending beam based on the location information and by a beam focusing manner.

In an embodiment, forming the PDCCH sending beam based on the location information and by the beam focusing manner includes:
determining a communication sub-area where the terminal device belongs based on the location information; and
using a beam, formed by beam focusing, corresponding to the communication sub-area where the terminal device belongs as the PDCCH sending beam,
where a corresponding relationship between the communication sub-area and the PDCCH sending beam is predefined.

In an embodiment, before sending the PDCCH signal, the operations further include:
sending second indication information to the terminal device, where the second indication information is used to indicate any one of:
the corresponding relationship between the communication sub-area and the PDCCH sending beam; or
the PDCCH sending beam.

In an embodiment, in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
where the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

In an embodiment, in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the operations further include:
obtaining location information of the terminal device, and forming the PDSCH sending beam based on the location information and by a beam focusing manner.

In an embodiment, forming the PDSCH sending beam based on the location information and by the beam focusing manner includes:
determining a communication sub-area to where the terminal device belongs based on the location information of the terminal device; and
using a beam, formed by beam focusing, corresponding to the communication sub-area where the terminal device belongs as the PDSCH sending beam,
where a corresponding relationship between the communication sub-area and the PDSCH sending beam is predefined.

In an embodiment, before sending the PDSCH signal, the operations further include:
sending third indication information to the terminal device, where the third indication information is used to indicate any one of:
the corresponding relationship between the communication sub-area and the PDSCH sending beam; or
the PDSCH sending beam.

In an embodiment, in case that a sending time gap between the PDSCH signal and a PDCCH signal that schedules the PDSCH signal is greater than a threshold, the operations further include:
indicating the PDSCH sending beam to the terminal device through the PDCCH signal that schedules the PDSCH signal.

In an embodiment, before sending the downlink signal, the operations further include:
sending fourth indication information to the terminal device, where the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, the operations further include:
turning off antenna elements on a periphery of the far-field antenna array and/or the near-field antenna array.

It should be noted here that the above network device provided by the embodiments of the present application may implement all the method steps implemented by the above embodiments of the methods for multi-antenna transmission performed by the network device, and may achieve the same effect. The same parts and beneficial effects as the same method embodiments are not repeated in the present application.

FIG. 13 is a schematic structural diagram of a terminal device according to an embodiment of the present application. As shown in FIG. 13, the terminal device includes a memory 1320, a transceiver 1300, and a processor 1310, where the where the processor 1310 and memory 1320 may be physically arranged separately.

The memory 1320 is used for storing a computer program, the transceiver 1300 is used for receiving and sending data under control of the processor 1310, and the processor 1310 is used for reading the computer program in the memory 1320 and performing following operations:
receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

In an embodiment, the transceiver 1300 is used for receiving and sending data under control of the processor 1310.

In FIG. 13, a bus architecture 1340 may include any number of interconnected buses and bridges, which are linked together through various circuits of one or more processors represented by the processor 1310 and one or more memories represented by the memory 1320. The bus architecture 1340 may also link together various other circuits, such as peripherals, voltage regulators, and power management circuits, etc., which are well known in the art, and therefore are not further described in the present application. The bus interface provides an interface. The transceiver 1300 may include multiple elements, i.e., including a transmitter and a receiver, units for providing communication with various other devices over transmission media including wireless channels, wired channels, fiber optic cables, and the like. For different user equipment, a user interface 1330 may also be included, the user interface 1330 may also be an interface capable of externally or internally connecting the required equipment, and the connected equipment includes, but not limited to, a keypad, a display, a speaker, a microphone, a joystick, and the like.

The processor 1310 is responsible for managing the bus architecture and general processing, and the memory 1320 may store data used by the processor 1310 when performing operations.

In an embodiment, the processor 1310 may be a central processing unit (CPU), an application specific integrated circuit (ASIC), a field-programmable gate array (FPGA), or a complex programmable logic device (CPLD), the processor may also use a multi-core architecture.

In an embodiment, the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
where the sub-array includes the far-field antenna array and/or the near-field antenna array; the division manner includes size information of the sub-array and/or location information of the sub-array; and the sending content includes the sub-array being used to send the PDCCH signal and/or the sub-array being used to send the PDSCH signal.

In an embodiment, in case that the fourth indication information is used to indicate the division manner corresponding to the sub-array and the sending content corresponding to the sub-array, determining a sending manner of the downlink signal based on the fourth indication information includes:
based on the division manner corresponding to the sub-array and a distance between the terminal device and the network device, determining that the sub-array is the far-field antenna array or the near-field antenna array; and
based on the sub-array being the far-field antenna array or the near-field antenna array, and the sending content corresponding to the sub-array, determining the sending manner of the downlink signal.

In an embodiment, in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
determining the PDCCH sending beam includes:
   determining the PDCCH sending beam based on the second indication information.

In an embodiment, in case that the second indication information is used to indicate the corresponding relationship between the communication sub-area and the PDCCH sending beam, determining the PDCCH sending beam based on the second indication information includes:
determining the communication sub-area where the terminal device belongs based on location information of the terminal device; and
determining the PDCCH sending beam based on the communication sub-area where the terminal device belongs and the corresponding relationship between the communication sub-area and the PDCCH sending beam.

In an embodiment, in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
determining the PDSCH sending beam includes:
   determining the PDSCH sending beam based on the third indication information.

In an embodiment, in case that the third indication information is used to indicate the corresponding relationship between the communication sub-area and the PDSCH sending beam, determining the PDSCH sending beam based on the third indication information includes:
determining the communication sub-area where the terminal device belongs based on location information of the terminal device; and
determining the PDSCH sending beam based on the communication sub-area where the terminal device belongs and the corresponding relationship between the communication sub-area and the PDSCH sending beam.

In an embodiment, in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

In an embodiment, in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
determining the PDSCH sending beam includes:
determining the PDSCH sending beam based on the first PDCCH sending beam, and the association relationship between the first PDCCH sending beam and the PDSCH sending beam,
where the first PDCCH sending beam is used to send the PDCCH signal that schedules the PDSCH signal.

In an embodiment, before receiving, from the network device, the downlink signal sent through the far-field antenna array and the near-field antenna array, the operations further include:
receiving first indication information sent from the network device, where the first indication information is used to indicate periodic sending of the downlink signal; and
receiving, from the network device, the downlink signal sent through the far-field antenna array and the near-field antenna array includes:
   periodically receiving, based on the first indication information, the downlink signal sent from the network device through the far-field antenna array and the near-field antenna array.

In an embodiment, the first indication information includes at least one of:
a start time of the periodic sending;
a duration of the periodic sending;
an end time of the periodic sending; or
mode information used to indicate a sending mode.

In an embodiment, the mode information includes at least one of:
a period size;
each time length unit included in a period; or
operation information corresponding to the network device in each time length unit.

In an embodiment, the terminal device is configured with at least one panel, and different panels are used to receive different beams.

It should be noted here that the above network device provided by the embodiments of the present application may implement all the method steps implemented by the above embodiments of the methods for multi-antenna transmission performed by the terminal device, and may achieve the same effect. The same parts and beneficial effects as the same method embodiments are not repeated in the present application.

An embodiment of the present application further provides a processor-readable storage medium storing a computer program, where the computer program is used for causing a processor to perform any of the methods for multi-antenna transmission performed by the network device provided by the above embodiments, including:
sending a downlink signal to a terminal device through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

An embodiment of the present application further provides a processor-readable storage medium storing a computer program, where the computer program is used for causing a processor to perform any of the methods for multi-antenna transmission performed by the terminal device provided by the above embodiments, including:
receiving, from a network device, a downlink signal sent through a far-field antenna array and a near-field antenna array,
where the terminal device is within a far-field range relative to the far-field antenna array, the terminal device is within a near-field range relative to the near-field antenna array, the downlink signal includes a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

The processor-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for multi-antenna transmission, performed by a network device, comprising:
sending a downlink signal to a terminal device through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

2. The method of claim 1, wherein the far-field antenna array and the near-field antenna array are obtained by the network device dividing an ultra-large-scale antenna array.

3. The method of claim 1, wherein sending the downlink signal to the terminal device through the far-field antenna array and the near-field antenna array comprises:
sending the PDCCH signal through the far-field antenna array; and
sending the PDSCH signal through the near-field antenna array.

4. The method of claim 1, wherein sending the downlink signal to the terminal device through the far-field antenna array and the near-field antenna array comprises:
in a first time length unit, sending the PDCCH signal and the PDSCH signal through the near-field antenna array;
and
in a second time length unit, sending the PDCCH signal and the PDSCH signal respectively through different far-field antenna arrays.

5. The method of claim 4, wherein the near-field antenna array is an ultra-large-scale antenna array.

6. The method of claim 5, wherein sending the PDCCH signal and the PDSCH signal through the near-field antenna array comprises:
sending the PDCCH signal and the PDSCH signal in a time division, frequency division or time-frequency division manner.

7. The method of claim 4, wherein the first time length unit and the second time length unit constitute a first period;
and
sending the downlink signal to the terminal device through the far-field antenna array and the near-field antenna array comprises:
periodically sending the downlink signal based on the first period.

8. The method of claim 1, wherein sending the downlink signal to the terminal device through the far-field antenna array and the near-field antenna array comprises:
in a third time length unit, sending the PDCCH signal through the far-field antenna array and sending the PDSCH signal through the near-field antenna array; and
in a fourth time length unit, sending the PDCCH signal and the PDSCH signal respectively through different far-field antenna arrays.

9. The method of claim 8, wherein the third time length unit and the fourth time length unit constitute a second period; and
sending the downlink signal to the terminal device through the far-field antenna array and the near-field antenna array comprises:
periodically sending, based on the second period, the downlink signal to the terminal device.

10. The method of claim 7 or 9, wherein before sending the downlink signal to the terminal device, the method further comprises:
sending first indication information to the terminal device, wherein the first indication information is used to indicate periodic sending of the downlink signal.

11. The method of claim 10, wherein the first indication information comprises at least one of:
a start time of the periodic sending;
a duration of the periodic sending;
an end time of the periodic sending; or
mode information used to indicate a sending mode.

12. The method of claim 11, wherein the mode information comprises at least one of:
a period size;
each time length unit comprised in a period; or
operation information corresponding to the network device in each time length unit.

13. The method of claim 1, wherein in case that the PDCCH signal is sent to the terminal device through the near-field antenna array, the method further comprises:
obtaining location information of the terminal device, and forming the PDCCH sending beam based on the location information and by a beam focusing manner.

14. The method of claim 13, wherein forming the PDCCH sending beam based on the location information and by the beam focusing manner comprises:
determining a communication sub-area where the terminal device belongs based on the location information; and
using a beam, formed by beam focusing, corresponding to the communication sub-area where the terminal device belongs as the PDCCH sending beam,
wherein a corresponding relationship between the communication sub-area and the PDCCH sending beam is predefined.

15. The method of claim 14, wherein before sending the PDCCH signal, the method further comprises:
sending second indication information to the terminal device, wherein the second indication information is used to indicate any one of:
the corresponding relationship between the communication sub-area and the PDCCH sending beam; or
the PDCCH sending beam.

16. The method of claim 1, wherein in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
wherein the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

17. The method of claim 1, wherein in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the method further comprises:
obtaining location information of the terminal device, and forming the PDSCH sending beam based on the location information and by a beam focusing manner.

18. The method of claim 17, wherein forming the PDSCH sending beam based on the location information and by the beam focusing manner comprises:
determining a communication sub-area to where the terminal device belongs based on the location information of the terminal device; and
using a beam, formed by beam focusing, corresponding to the communication sub-area where the terminal device belongs as the PDSCH sending beam,
wherein a corresponding relationship between the communication sub-area and the PDSCH sending beam is predefined.

19. The method of claim 18, wherein before sending the PDSCH signal, the method further comprises:
sending third indication information to the terminal device, wherein the third indication information is used to indicate any one of:
the corresponding relationship between the communication sub-area and the PDSCH sending beam; or
the PDSCH sending beam.

20. The method of claim 1, wherein in case that a sending time gap between the PDSCH signal and a PDCCH signal that schedules the PDSCH signal is greater than a threshold, the method further comprises:
indicating the PDSCH sending beam to the terminal device through the PDCCH signal that schedules the PDSCH signal.

21. The method of any of claims 13 to 20, wherein before sending the downlink signal, the method further comprises:
sending fourth indication information to the terminal device, wherein the fourth indication information is used to indicate at least one of:
a division manner corresponding to a sub-array and sending content corresponding to the sub-array;
a sending manner of the PDSCH signal being sent from the far-field antenna array or the near-field antenna array;
or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

22. The method of any of claims 1 to 9 and 13 to 19, further comprising:
turning off antenna elements on a periphery of the far-field antenna array and/or the near-field antenna array.

23. A method for multi-antenna transmission, performed by a terminal device, comprising:
receiving, from a network device, a downlink signal sent through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

24. The method of claim 23, wherein before receiving, from the network device, the downlink signal sent through the far-field antenna array and the near-field antenna array, the method further comprises:
receiving fourth indication information sent from the network device;
determining a sending manner of the downlink signal based on the fourth indication information;
determining a PDCCH sending beam and/or a PDSCH sending beam based on the sending manner of the downlink signal and beam indication information; and
determining the PDCCH receiving beam based on the PDCCH sending beam, and/or, determining the PDSCH receiving beam based on the PDSCH sending beam,
wherein the sending manner of the downlink signal comprises being sent from the far-field antenna array or the near-field antenna array; and the beam indication information is received from the network device or pre-agreed between the terminal device and the network device.

25. The method of claim 24, wherein the fourth indication information is used to indicate at least one of:
a division manner corresponding to a sub-array and sending content corresponding to the sub-array;
a sending manner of the PDSCH signal being sent from the far-field antenna array or the near-field antenna array;
or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

26. The method of claim 25, wherein in case that the fourth indication information is used to indicate the division manner corresponding to the sub-array and the sending content corresponding to the sub-array, determining the sending manner of the downlink signal based on the fourth indication information comprises:
based on the division manner corresponding to the sub-array and a distance between the terminal device and the network device, determining that the sub-array is the far-field antenna array or the near-field antenna array; and
based on the sub-array being the far-field antenna array or the near-field antenna array, and the sending content corresponding to the sub-array, determining the sending manner of the downlink signal.

27. The method of claim 24, wherein in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam; and
determining the PDCCH sending beam comprises:
determining the PDCCH sending beam based on the second indication information.

28. The method of claim 27, wherein in case that the second indication information is used to indicate the corresponding relationship between the communication sub-area and the PDCCH sending beam, determining the PDCCH sending beam based on the second indication information comprises:
determining the communication sub-area where the terminal device belongs based on location information of the terminal device; and
determining the PDCCH sending beam based on the communication sub-area where the terminal device belongs and the corresponding relationship between the communication sub-area and the PDCCH sending beam.

29. The method of claim 24, wherein in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
determining the PDSCH sending beam comprises:
determining the PDSCH sending beam based on the third indication information.

30. The method of claim 29, wherein in case that the third indication information is used to indicate the corresponding relationship between the communication sub-area and the PDSCH sending beam, determining the PDSCH sending beam based on the third indication information comprises:
determining the communication sub-area where the terminal device belongs based on location information of the terminal device; and
determining the PDSCH sending beam based on the communication sub-area where the terminal device belongs and the corresponding relationship between the communication sub-area and the PDSCH sending beam.

31. The method of claim 24, wherein in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

32. The method of claim 24, wherein in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
determining the PDSCH sending beam comprises:
determining the PDSCH sending beam based on the first PDCCH sending beam, and the association relationship between the first PDCCH sending beam and the PDSCH sending beam,
wherein the first PDCCH sending beam is used to send the PDCCH signal that schedules the PDSCH signal.

33. The method of any of claims 23 to 32, wherein before receiving, from the network device, the downlink signal sent through the far-field antenna array and the near-field antenna array, the method further comprises:
receiving first indication information sent from the network device, wherein the first indication information is used to indicate periodic sending of the downlink signal; and
receiving, from the network device, the downlink signal sent through the far-field antenna array and the near-field antenna array comprises:
periodically receiving, based on the first indication information, the downlink signal sent from the network device through the far-field antenna array and the near-field antenna array.

34. The method of claim 33, wherein the first indication information comprises at least one of:
a start time of the periodic sending;
a duration of the periodic sending;
an end time of the periodic sending; or
mode information used to indicate a sending mode.

35. The method of claim 34, wherein the mode information comprises at least one of:
a period size;
each time length unit comprised in a period; or
operation information corresponding to the network device in each time length unit.

36. The method of any of claims 23 to 32, wherein the terminal device is configured with at least one panel, and different panels are used to receive different beams.

37. A network device, comprising a memory, a transceiver and a processor,
wherein the memory is used for storing a computer program, the transceiver is used for receiving and sending data under control of the processor, and the processor is used for reading the computer program in the memory and performing following operations:
sending a downlink signal to a terminal device through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

38. The network device of claim 37, wherein the far-field antenna array and the near-field antenna array are obtained by the network device dividing an ultra-large-scale antenna array.

39. The network device of claim 37, wherein sending the downlink signal to the terminal device through the far-field antenna array and the near-field antenna array comprises:
sending the PDCCH signal through the far-field antenna array; and
sending the PDSCH signal through the near-field antenna array.

40. The network device of claim 37, wherein sending the downlink signal to the terminal device through the far-field antenna array and the near-field antenna array comprises:
in a first time length unit, sending the PDCCH signal and the PDSCH signal through the near-field antenna array; and
in a second time length unit, sending the PDCCH signal and the PDSCH signal respectively through different far-field antenna arrays.

41. The network device of claim 40, wherein the near-field antenna array is an ultra-large-scale antenna array.

42. The network device of claim 41, wherein sending the PDCCH signal and the PDSCH signal through the near-field antenna array comprises:
sending the PDCCH signal and the PDSCH signal in a time division, frequency division or time-frequency division manner.

43. The network device of claim 40, wherein the first time length unit and the second time length unit constitute a first period; and
sending the downlink signal to the terminal device through the far-field antenna array and the near-field antenna array comprises:
periodically sending the downlink signal based on the first period.

44. The network device of claim 37, wherein sending the downlink signal to the terminal device through the far-field antenna array and the near-field antenna array comprises:
in a third time length unit, sending the PDCCH signal through the far-field antenna array and sending the PDSCH signal through the near-field antenna array; and
in a fourth time length unit, sending the PDCCH signal and the PDSCH signal respectively through different far-field antenna arrays.

45. The network device of claim 44, wherein the third time length unit and the fourth time length unit constitute a second period; and
sending the downlink signal to the terminal device through the far-field antenna array and the near-field antenna array comprises:
periodically sending, based on the second period, the downlink signal to the terminal device.

46. The network device of claim 43 or 45, wherein before sending the downlink signal to the terminal device, the operations further comprise:
sending first indication information to the terminal device, wherein the first indication information is used to indicate periodic sending of the downlink signal.

47. The network device of claim 46, wherein the first indication information comprises at least one of:
a start time of the periodic sending;
a duration of the periodic sending;
an end time of the periodic sending; or
mode information used to indicate a sending mode.

48. The network device of claim 47, wherein the mode information comprises at least one of:
a period size;
each time length unit comprised in a period; or
operation information corresponding to the network device in each time length unit.

49. The network device of claim 37, wherein in case that the PDCCH signal is sent to the terminal device through the near-field antenna array, the operations further comprise:
obtaining location information of the terminal device, and forming the PDCCH sending beam based on the location information and by a beam focusing manner.

50. The network device of claim 49, wherein forming the PDCCH sending beam based on the location information and by the beam focusing manner comprises:
determining a communication sub-area where the terminal device belongs based on the location information; and
using a beam, formed by beam focusing, corresponding to the communication sub-area where the terminal device belongs as the PDCCH sending beam,
wherein a corresponding relationship between the communication sub-area and the PDCCH sending beam is predefined.

51. The network device of claim 50, wherein before sending the PDCCH signal, the operations further comprise:
sending second indication information to the terminal device, wherein the second indication information is used to indicate any one of:
the corresponding relationship between the communication sub-area and the PDCCH sending beam; or
the PDCCH sending beam.

52. The network device of claim 37, wherein in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
wherein the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

53. The network device of claim 37, wherein in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the operations further comprise:
obtaining location information of the terminal device, and forming the PDSCH sending beam based on the location information and by a beam focusing manner.

54. The network device of claim 53, wherein forming the PDSCH sending beam based on the location information and by the beam focusing manner comprises:
determining a communication sub-area to where the terminal device belongs based on the location information of the terminal device; and
using a beam, formed by beam focusing, corresponding to the communication sub-area where the terminal device belongs as the PDSCH sending beam,
wherein a corresponding relationship between the communication sub-area and the PDSCH sending beam is predefined.

55. The network device of claim 54, wherein before sending the PDSCH signal, the operations further comprise:
sending third indication information to the terminal device, wherein the third indication information is used to indicate any one of:
the corresponding relationship between the communication sub-area and the PDSCH sending beam; or
the PDSCH sending beam.

56. The network device of claim 37, wherein in case that a sending time gap between the PDSCH signal and a PDCCH signal that schedules the PDSCH signal is greater than a threshold, the operations further comprise:
indicating the PDSCH sending beam to the terminal device through the PDCCH signal that schedules the PDSCH signal.

57. The network device of any of claims 39 to 56, wherein before sending the downlink signal, the operations further comprise:
sending fourth indication information to the terminal device, wherein the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

58. The network device of any of claims 37 to 45 and 49 to 55, wherein the operations further comprise:
turning off antenna elements on a periphery of the far-field antenna array and/or the near-field antenna array.

59. A terminal device, comprising a memory, a transceiver and a processor, wherein the memory is used for storing a computer program, the transceiver is used for receiving and sending data under control of the processor, and the processor is used for reading the computer program in the memory and performing following operations:
receiving, from a network device, a downlink signal sent through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

60. The terminal device of claim 59, where before receiving, from the network device, the downlink signal sent through the far-field antenna array and the near-field antenna array, the operations further comprise:
receiving fourth indication information sent from the network device;
determining a sending manner of the downlink signal based on the fourth indication information;
determining a PDCCH sending beam and/or a PDSCH sending beam based on the sending manner of the downlink signal and beam indication information; and
determining the PDCCH receiving beam based on the PDCCH sending beam, and/or, determining the PDSCH receiving beam based on the PDSCH sending beam,
wherein the sending manner of the downlink signal comprises being sent from the far-field antenna array or the near-field antenna array; and the beam indication information is received from the network device or pre-agreed between the terminal device and the network device.

61. The terminal device of claim 60, wherein the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

62. The terminal device of claim 61, wherein in case that the fourth indication information is used to indicate the division manner corresponding to the sub-array and the sending content corresponding to the sub-array, determining a sending manner of the downlink signal based on the fourth indication information comprises:
based on the division manner corresponding to the sub-array and a distance between the terminal device and the network device, determining that the sub-array is the far-field antenna array or the near-field antenna array; and
based on the sub-array being the far-field antenna array or the near-field antenna array, and the sending content corresponding to the sub-array, determining the sending manner of the downlink signal.

63. The terminal device of claim 60, wherein in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
determining the PDCCH sending beam comprises:
determining the PDCCH sending beam based on the second indication information.

64. The terminal device of claim 63, wherein in case that the second indication information is used to indicate the corresponding relationship between the communication sub-area and the PDCCH sending beam, determining the PDCCH sending beam based on the second indication information comprises:
determining the communication sub-area where the terminal device belongs based on location information of the terminal device; and
determining the PDCCH sending beam based on the communication sub-area where the terminal device belongs and the corresponding relationship between the communication sub-area and the PDCCH sending beam.

65. The terminal device of claim 60, wherein in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
determining the PDSCH sending beam comprises:
determining the PDSCH sending beam based on the third indication information.

66. The terminal device of claim 65, wherein in case that the third indication information is used to indicate the corresponding relationship between the communication sub-area and the PDSCH sending beam, determining the PDSCH sending beam based on the third indication information comprises:
determining the communication sub-area where the terminal device belongs based on location information of the terminal device; and
determining the PDSCH sending beam based on the communication sub-area where the terminal device belongs and the corresponding relationship between the communication sub-area and the PDSCH sending beam.

67. The terminal device of claim 60, wherein in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

68. The terminal device of claim 60, wherein in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
determining the PDSCH sending beam comprises:
determining the PDSCH sending beam based on the first PDCCH sending beam, and the association relationship between the first PDCCH sending beam and the PDSCH sending beam,
wherein the first PDCCH sending beam is used to send the PDCCH signal that schedules the PDSCH signal.

69. The terminal device of any of claims 59 to 68, wherein before receiving, from the network device, the downlink signal sent through the far-field antenna array and the near-field antenna array, the operations further comprise:
receiving first indication information sent from the network device, wherein the first indication information is used to indicate periodic sending of the downlink signal; and
receiving, from the network device, the downlink signal sent through the far-field antenna array and the near-field antenna array comprises:
periodically receiving, based on the first indication information, the downlink signal sent from the network device through the far-field antenna array and the near-field antenna array.

70. The terminal device of claim 69, wherein the first indication information comprises at least one of:
a start time of the periodic sending;
a duration of the periodic sending;
an end time of the periodic sending; or
mode information used to indicate a sending mode.

71. The terminal device of claim 70, wherein the mode information comprises at least one of:
a period size;
each time length unit comprised in a period; or
operation information corresponding to the network device in each time length unit.

72. The terminal device of any of claims 59 to 68, wherein the terminal device is configured with at least one panel, and different panels are used to receive different beams.

73. An apparatus for multi-antenna transmission, for use in a network device, comprising:
a sending unit, used for sending a downlink signal to a terminal device through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is sent based on a PDCCH sending beam, and the PDSCH signal is sent based on a PDSCH sending beam.

74. The apparatus of claim 73, wherein the far-field antenna array and the near-field antenna array are obtained by the network device dividing an ultra-large-scale antenna array.

75. The apparatus of claim 73, wherein the sending unit, used for sending the downlink signal to the terminal device through the far-field antenna array and the near-field antenna array, comprises:
the sending unit is used for sending the PDCCH signal through the far-field antenna array; and
the sending unit is used for sending the PDSCH signal through the near-field antenna array.

76. The apparatus of claim 73, wherein the sending unit, used for sending the downlink signal to the terminal device through the far-field antenna array and the near-field antenna array, comprises:
the sending unit is used for, in a first time length unit, sending the PDCCH signal and the PDSCH signal through the near-field antenna array; and
the sending unit is used for, in a second time length unit, sending the PDCCH signal and the PDSCH signal respectively through different far-field antenna arrays.

77. The apparatus of claim 76, wherein the near-field antenna array is an ultra-large-scale antenna array.

78. The apparatus of claim 77, wherein the sending unit is used for sending the PDCCH signal and the PDSCH signal through the near-field antenna array comprises:
the sending unit is used for sending the PDCCH signal and the PDSCH signal in a time division, frequency division or time-frequency division manner.

79. The apparatus of claim 76, wherein the first time length unit and the second time length unit constitute a first period; and
the sending unit, used for sending the downlink signal to the terminal device through the far-field antenna array and the near-field antenna array, comprises:
the sending unit is used for periodically sending the downlink signal based on the first period.

80. The apparatus of claim 73, wherein the sending unit, used for sending the downlink signal to the terminal device through the far-field antenna array and the near-field antenna array, comprises:
the sending unit is used for, in a third time length unit, sending the PDCCH signal through the far-field antenna array and sending the PDSCH signal through the near-field antenna array; and
the sending unit is used for, in a fourth time length unit, sending the PDCCH signal and the PDSCH signal respectively through different far-field antenna arrays.

81. The apparatus of claim 80, wherein the third time length unit and the fourth time length unit constitute a second period; and
the sending unit, used for sending the downlink signal to the terminal device through the far-field antenna array and the near-field antenna array, comprises:
the sending unit is used for periodically sending, based on the second period, the downlink signal to the terminal device.

82. The apparatus of claim 79 or 81, wherein the sending unit is further used for, before sending the downlink signal to the terminal device, sending first indication information to the terminal device, wherein the first indication information is used to indicate periodic sending of the downlink signal.

83. The apparatus of claim 82, wherein the first indication information comprises at least one of:
a start time of the periodic sending;
a duration of the periodic sending;
an end time of the periodic sending; or
mode information used to indicate a sending mode.

84. The apparatus of claim 83, wherein the mode information comprises at least one of:
a period size;
each time length unit comprised in a period; or
operation information corresponding to the network device in each time length unit.

85. The apparatus of claim 73, wherein in case that the PDCCH signal is sent to the terminal device through the near-field antenna array, the apparatus further comprises a first sending beam determining unit, wherein
the first sending beam determining unit is used for obtaining location information of the terminal device, and forming the PDCCH sending beam based on the location information and by a beam focusing manner.

86. The apparatus of claim 85, wherein the first sending beam determining unit is used for forming the PDCCH sending beam based on the location information and by the beam focusing manner comprises:
the first sending beam determining unit is used for determining a communication sub-area where the terminal device belongs based on the location information; and
the first sending beam determining unit is used for using a beam, formed by beam focusing, corresponding to the communication sub-area where the terminal device belongs as the PDCCH sending beam,
wherein a corresponding relationship between the communication sub-area and the PDCCH sending beam is predefined.

87. The apparatus of claim 86, wherein the sending unit is further used for, before sending the PDCCH signal, sending second indication information to the terminal device, wherein the second indication information is used to indicate any one of:
the corresponding relationship between the communication sub-area and the PDCCH sending beam; or
the PDCCH sending beam.

88. The apparatus of claim 73, wherein in case that a PDCCH signal that schedules the PDSCH signal is sent through the near-field antenna array and a sending time gap between the PDSCH signal and the PDCCH signal that schedules the PDSCH signal is less than or equal to a threshold, the PDSCH sending beam is an associated beam corresponding to a first PDCCH sending beam,
wherein the first PDCCH sending beam is used to send the PDCCH signal that schedules the PDSCH signal, and the associated beam corresponding to the first PDCCH sending beam is pre-agreed between the network device and the terminal device, or the associated beam corresponding to the first PDCCH sending beam is determined by the network device and indicated to the terminal device.

89. The apparatus of claim 73, wherein in case that the PDSCH signal is sent through the near-field antenna array, a PDCCH signal that schedules the PDSCH signal is sent through the far-field antenna array, and a sending time gap between the PDSCH signal and the PDCCH signal that schedules the PDSCH signal is less than or equal to a threshold, the apparatus further comprises a second sending beam determining unit, wherein
the second sending beam determining unit is used for obtaining location information of the terminal device, and forming the PDSCH sending beam based on the location information and by a beam focusing manner.

90. The apparatus of claim 89, wherein the second sending beam determining unit is used for forming the PDSCH sending beam based on the location information and by the beam focusing manner comprises:
the second sending beam determining unit is used for determining a communication sub-area to where the terminal device belongs based on the location information of the terminal device; and
the second sending beam determining unit is used for using a beam, formed by beam focusing, corresponding to the communication sub-area where the terminal device belongs as the PDSCH sending beam,
wherein a corresponding relationship between the communication sub-area and the PDSCH sending beam is predefined.

91. The apparatus of claim 90, wherein the sending unit is used for, before sending the PDSCH signal, sending third indication information to the terminal device, wherein
the third indication information is used to indicate any one of:
the corresponding relationship between the communication sub-area and the PDSCH sending beam; or
the PDSCH sending beam.

92. The apparatus of claim 73, wherein in case that a sending time gap between the PDSCH signal and a PDCCH signal that schedules the PDSCH signal is greater than a threshold, the apparatus further comprises a first indicating unit, wherein
the first indicating unit is used for indicating the PDSCH sending beam to the terminal device through the PDCCH signal that schedules the PDSCH signal.

93. The apparatus of any of claims 85 to 92, wherein the sending unit is further used for, before sending the downlink signal, sending fourth indication information to the terminal device, wherein
the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

94. The apparatus of any of claims 73 to 81 and 85 to 91, wherein the apparatus further comprises a turning-off unit, wherein
the turning-off unit is used for turning off antenna elements on a periphery of the far-field antenna array and/or the near-field antenna array.

95. An apparatus for multi-antenna transmission, for use in a terminal device, comprising:
a receiving unit, used for receiving, from a network device, a downlink signal sent through a far-field antenna array and a near-field antenna array,
wherein the terminal device is within a far-field range relative to the far-field antenna array, the terminal device is within a near-field range relative to the near-field antenna array, the downlink signal comprises a physical downlink control channel (PDCCH) signal and/or a physical downlink shared channel (PDSCH) signal, the PDCCH signal is received based on a PDCCH receiving beam, and the PDSCH signal is received based on a PDSCH receiving beam.

96. The apparatus of claim 95, further comprising: a sending manner determining unit, a third sending beam determining unit, and a receiving beam determining unit, wherein
the receiving unit is further used for receiving fourth indication information sent from the network device;
the sending manner determining unit is used for determining a sending manner of the downlink signal based on the fourth indication information;
the third sending beam determining unit is used for determining a PDCCH sending beam and/or a PDSCH sending beam based on the sending manner of the downlink signal and beam indication information; and
the receiving beam determining unit is used for determining the PDCCH receiving beam based on the PDCCH sending beam, and/or, determining the PDSCH receiving beam based on the PDSCH sending beam,
wherein the sending manner of the downlink signal comprises being sent from the far-field antenna array or the near-field antenna array; and the beam indication information is received from the network device or pre-agreed between the terminal device and the network device.

97. The apparatus of claim 96, wherein the fourth indication information is used to indicate at least one of:
a division manner corresponding to a sub-array and sending content corresponding to the sub-array;
a sending manner of the PDSCH signal being sent from the far-field antenna array or the near-field antenna array; or
a sending manner of the PDCCH signal being sent from the far-field antenna array or the near-field antenna array,
wherein the sub-array comprises the far-field antenna array and/or the near-field antenna array; the division manner comprises size information of the sub-array and/or location information of the sub-array; and the sending content comprises the sub-array being used to send the PDCCH signal and/or the sub-array being used to send the PDSCH signal.

98. The apparatus of claim 97, wherein in case that the fourth indication information is used to indicate the division manner corresponding to the sub-array and the sending content corresponding to the sub-array, the sending manner determining unit is used for determining a sending manner of the downlink signal based on the fourth indication information comprises:
the sending manner determining unit is used for, based on the division manner corresponding to the sub-array and a distance between the terminal device and the network device, determining that the sub-array is the far-field antenna array or the near-field antenna array; and
the sending manner determining unit is used for, based on the sub-array being the far-field antenna array or the near-field antenna array, and the sending content corresponding to the sub-array, determining the sending manner of the downlink signal.

99. The apparatus of claim 96, wherein in case that a sending manner of the PDCCH signal is being sent from the near-field antenna array, the beam indication information is second indication information, the second indication information is received by the terminal device from the network device, and the second indication information is used to indicate any of:
the PDCCH sending beam; or
a corresponding relationship between a communication sub-area and the PDCCH sending beam;
the third sending beam determining unit is used for determining the PDCCH sending beam comprises:
the third sending beam determining unit is used for determining the PDCCH sending beam based on the second indication information.

100. The apparatus of claim 99, wherein in case that the second indication information is used to indicate the corresponding relationship between the communication sub-area and the PDCCH sending beam, the third sending beam determining unit is used for determining the PDCCH sending beam based on the second indication information comprises:
the third sending beam determining unit is used for determining the communication sub-area where the terminal device belongs based on location information of the terminal device; and
the third sending beam determining unit is used for determining the PDCCH sending beam based on the communication sub-area where the terminal device belongs and the corresponding relationship between the communication sub-area and the PDCCH sending beam.

101. The apparatus of claim 96, wherein in case that a sending manner of the PDSCH signal is being sent from the near-field antenna array, a sending manner of a PDCCH signal that schedules the PDSCH signal is being sent from the far-field antenna array, and a sending time gap between the PDSCH signal and the PDCCH signal that schedules the PDSCH signal is less than or equal to a threshold, the beam indication information is third indication information, the third indication information is received by the terminal device from the network device, and the third indication information is used to indicate any of:
the PDSCH sending beam; or
a corresponding relationship between a communication sub-area and the PDSCH sending beam; and
the third sending beam determining unit is used for determining the PDSCH sending beam comprises:
the third sending beam determining unit is used for determining the PDSCH sending beam based on the third indication information.

102. The apparatus of claim 101, wherein in case that the third indication information is used to indicate the corresponding relationship between the communication sub-area and the PDSCH sending beam, the third sending beam determining unit is used for determining the PDSCH sending beam based on the third indication information comprises:
the third sending beam determining unit is used for determining the communication sub-area where the terminal device belongs based on location information of the terminal device; and
the third sending beam determining unit is used for determining the PDSCH sending beam based on the communication sub-area where the terminal device belongs and the corresponding relationship between the communication sub-area and the PDSCH sending beam.

103. The apparatus of claim 96, wherein in case that a sending time gap between the PDSCH signal and a PDCCH signal that schedules the PDSCH signal is greater than a threshold, the beam indication information is used to indicate the PDSCH sending beam; and
the beam indication information is carried by the PDCCH signal that schedules the PDSCH signal.

104. The apparatus of claim 96, wherein in case that a sending manner of a PDCCH signal that schedules the PDSCH signal is being sent from the near-field antenna array, and a sending time gap between the PDSCH signal and the PDCCH signal that schedules the PDSCH signal is less than or equal to a threshold, the beam indication information is an association relationship between a first PDCCH sending beam and the PDSCH sending beam; and
the third sending beam determining unit is used for determining the PDSCH sending beam comprises:
the third sending beam determining unit is used for determining the PDSCH sending beam based on the first PDCCH sending beam, and the association relationship between the first PDCCH sending beam and the PDSCH sending beam,
wherein the first PDCCH sending beam is used to send the PDCCH signal that schedules the PDSCH signal.

105. The apparatus of any of claims 95 to 104, wherein before receiving, from the network device, the downlink signal sent through the far-field antenna array and the near-field antenna array:
the receiving unit is further used for receiving first indication information sent from the network device, wherein the first indication information is used to indicate periodic sending of the downlink signal; and
the receiving unit is used for receiving, from the network device, the downlink signal sent through the far-field antenna array and the near-field antenna array comprises:
the receiving unit is used for, periodically receiving, based on the first indication information, the downlink signal sent from the network device through the far-field antenna array and the near-field antenna array.

106. The apparatus of claim 105, wherein the first indication information comprises at least one of:
a start time of the periodic sending;
a duration of the periodic sending;
an end time of the periodic sending; or
mode information used to indicate a sending mode.

107. The apparatus of claim 106, wherein the mode information comprises at least one of:
a period size;
each time length unit comprised in a period; or
operation information corresponding to the network device in each time length unit.

108. The apparatus of any of claims 95 to 104, wherein the terminal device is configured with at least one panel, and different panels are used to receive different beams.

109. A processor-readable storage medium storing a computer program, wherein the computer program is used for causing a processor to perform the method of any of claims 1 to 22.

110. A processor-readable storage medium storing a computer program, wherein the computer program is used for causing a processor to perform the method of any of claims 23 to 36.
